# EUROPEAN PATENT APPLICATION

(11) **EP 4 707 712 A1**
(43) Date of publication of application: **11.03.2026**
(21) Application number: 24872706.7
(22) Date of filing: 05.08.2024
(51) Int. Cl.: F25D 29/00, F25D 23/12, F25D 21/14, F25C 1/24, F25C 1/25, G01F 23/263

(54) **REFRIGERATOR INCLUDING WATER TANK**

(30) Priority: 27.09.2023 KR 20230131159
(71) Applicant: Samsung Electronics Co., Ltd., Suwon-si, Gyeonggi-do 16677 (KR)
(72) Inventor: PARK, Youngjo, Suwon-si, Gyeonggi-do 16677 (KR); LEE, Seongu, Suwon-si, Gyeonggi-do 16677 (KR); KWAK, Seongoh, Suwon-si, Gyeonggi-do 16677 (KR); PARK, Kitae, Suwon-si, Gyeonggi-do 16677 (KR); CHO, Yongik, Suwon-si, Gyeonggi-do 16677 (KR)
(74) Representative: Walaski, Jan Filip
(86) International application number: PCT/KR2024/011508
(87) International publication number: WO 2025/070997

(57) **Abstract**

A refrigerator includes: a main body, a door rotationally or slidably installed at a front of the main body, at least one storage chamber configured to store items, a water tank arranged in the at least one storage chamber and configured to store water to be supplied to at least one water supply system, a water detection sensor configured to detect the water stored in the water tank, and at least one processor configured to, when the water stored in the water tank is detected for at least a certain period of time by the water detection sensor, control a first pump to discharge the water stored in the water tank onto an evaporation tray under a condenser in a machine room by using a discharge path for defrost water.

## Description

### TECHNICAL FIELD

The disclosure relates to a refrigerator with a water tank.

### BACKGROUND ART

The refrigerator is a device for keeping foods or medicines at low temperature or at a proper usage temperature to prevent them from going bad. In general, the refrigerator may use a refrigeration cycle comprised of a compressor, a condenser, an expansion valve and an evaporator to refrigerate and store the foods.

Recently, refrigerators are sometimes equipped with an ice maker that automatically produces ice. The user has supplied water to the ice maker in person in the past, but recently developed refrigerators are able to automatically supply water to the ice maker themselves. Refrigerators having this water supply function may be largely divided into a plumbing type and a non-plumbing type. The plumbing type receives water from an external water pipe, and the non-plumbing type includes a water tank inside, requiring the user to supply water into the water tank in person.

The non-plumbing type is more suitable for a structure that has difficulty in connecting the external water pipe to the refrigerator than the plumbing type. Furthermore, as compared to the plumbing type, the non-plumbing type has an advantage of being simple in structure and free in movement (e.g., moving or changing the location of the refrigerator).

### Disclosure of Invention

### Solution to Problem

According to an embodiment of the disclosure, a refrigerator includes a main body; a door rotationally or slidably installed at a front of the main body; at least one storage chamber for storing items; a water tank arranged in the at least one storage chamber and configured to store water to be supplied to at least one water supply system; a water detection sensor configured to detect the water stored in the water tank; and at least one processor configured to control a first pump to discharge water stored in the water tank onto an evaporation tray under a condenser in a machine room through a discharge path for defrost water, when the water stored in the water tank is detected by a water detection sensor for at least a certain period of time.

According to an embodiment of the disclosure, a refrigerator includes a main body; a door rotationally or slidably installed at a front of the main body; at least one storage chamber configured to store items; a water tank arranged in the at least one storage chamber and configured to store water to be supplied to at least one water supply system; a water detection sensor configured to detect the water stored in the water tank; and at least one processor configured to, when the water stored in the water tank is detected for at least a certain period of time by the water detection sensor and an operation of a user who uses the refrigerator is detected, output an alert to empty the water tank through at least one of user equipment connected to a server device, a display or a speaker.

### Brief Description of Drawings

FIG. 1 is a diagram for describing a water supply system of a refrigerator, according to an embodiment of the disclosure.
FIG. 2 is a diagram for describing a water tank and a water detection sensor, according to an embodiment of the disclosure.
FIG. 3 is a diagram for describing shapes of the bottom of a water tank, according to an embodiment of the disclosure.
FIG. 4 is a diagram for describing a position of a water detection sensor, according to an embodiment of the disclosure.
FIG. 5 is a diagram for describing a water detection sensor, according to an embodiment of the disclosure.
FIG. 6 is a diagram for describing a system for discharging water from a water tank, according to an embodiment of the disclosure.
FIG. 7 is a diagram for describing a system for discharging water from a water tank onto an evaporation tray, according to an embodiment of the disclosure.
FIG. 8 is a flowchart for describing a method of determining a time to discharge or an amount of discharging water stored in a water tank, according to an embodiment of the disclosure.
FIG. 9 is a diagram for describing a defrost amount and a defrost operation cycle, according to an embodiment of the disclosure.
FIG. 10 is a flowchart for describing a way of discharging water from a water tank, according to an embodiment of the disclosure.
FIG. 11 is a diagram for describing an operation of supplying water from a water tank to an ice maker, according to an embodiment of the disclosure.
FIG. 12 is a diagram for describing an operation of supplying water from a water tank to an auto fill device, according to an embodiment of the disclosure.
FIG. 13 is a flowchart for describing a method of outputting an alert to empty a water tank or a notification indicating that discharging of remaining water will start, according to an embodiment of the disclosure.
FIG. 14 is a diagram for describing an operation of outputting an alert to empty a water tank through a display of a refrigerator, according to an embodiment of the disclosure.
FIG. 15 is a diagram for describing an operation of outputting an alert to empty a water tank through user equipment connected to a server device, according to an embodiment of the disclosure.
FIG. 16 is a diagram for describing an operation of outputting a notification indicating that discharging of remaining water will start, according to an embodiment of the disclosure.
FIG. 17 is a flowchart for describing a method of deactivating a pump's operation for supplying water to a water supply system, according to an embodiment of the disclosure.
FIG. 18 is a diagram for describing an operation of outputting an alert to replenish a water tank with water, according to an embodiment of the disclosure.
FIG. 19 is a flowchart for describing a method of outputting an alert when the temperature in a refrigerator is at least a reference temperature, according to an embodiment of the disclosure.
FIG. 20 is a diagram for describing an operation of outputting an alert to check the temperature in a refrigerator or an alert to check the status of a water tank, according to an embodiment of the disclosure.

### Mode for the Invention

Terms as used herein will be described before detailed descriptions of an embodiments of the disclosure are provided.

The terms are selected as common terms that are currently widely used, taking into account principles of the disclosure, which may however depend on intentions of those of ordinary skill in the art, judicial precedents, emergence of new technologies, and the like. Some terms as used herein are selected at the applicant's discretion, in which case, the terms will be explained later in detail in connection with embodiments of the disclosure. Therefore, the terms should be defined based on their meanings and descriptions throughout the disclosure.

Throughout the disclosure, the expression "at least one of a, b or c" indicates only a, only b, only c, both a and b, both a and c, both b and c, all of a, b, and c, or variations thereof.

The term "include (or including)" or "comprise (or comprising)" is inclusive or openended and does not exclude additional, unrecited elements or method steps. The terms "unit", "module", "block", etc., as used herein each represent a unit for handling at least one function or operation, and may be implemented in hardware, software, or a combination thereof.

An embodiment of the disclosure will now be described in detail with reference to accompanying drawings so as to be readily practiced by those of ordinary skill in the art. However, an embodiment of the disclosure may be implemented in many different forms, and is not limited to that discussed herein. In the drawings, parts unrelated to the description are omitted for clarity, and like numerals refer to like elements throughout the specification.

In an embodiment of the disclosure, a refrigerator may include a main body.

The main body may include an inner casing, an outer casing arranged on the outside of the inner casing, and insulation arranged between the inner casing and the outer casing.

The inner casing may include at least one of a case, a plate, a panel or a liner, which defines a storage chamber. The inner casing may be formed in one body unit or may be formed by assembling multiple plates. The outer casing may define the exterior of the main body, and may be coupled to the outside of the inner casing such that the insulation is placed between the inner casing and the outer casing.

The insulation may insulate inside and outside of the storage chamber so that the temperature in the storage chamber is maintained at a set suitable temperature without being influenced by external environments of the storage chamber. In an embodiment of the disclosure, the insulation may include foam insulation. The foam insulation may be formed by injecting and foaming urethane foam made of a mixture of polyurethane and a foam agent between the inner casing and the outer casing.

In an embodiment of the disclosure, the insulation may include an additional vacuum insulation in addition to the foam insulation, or may include only the vacuum insulation instead of the foam insulation. The vacuum insulation may include a core material and an outer cover material that accommodates the core material and seals the inside at vacuum pressure or almost vacuum pressure. The insulation is not, however, limited to the foam insulation or vacuum insulation, but may include various materials that may be used for insulation.

The storage chamber may include a space defined by the inner casing. The storage chamber may further include an inner casing that defines the space corresponding to the storage chamber. Various items such as foods, medicines, cosmetics, etc., may be stored in the storage chamber, and the storage chamber may be formed with one side open to put in or take out the items.

The refrigerator may include one or more storage chambers. When there are two or more storage chambers formed in the refrigerator, each storage chamber may have a different use and may be maintained at a different temperature. For this, the storage chambers may be separated by partition walls including insulation.

The storage chambers may be provided to be each maintained at a suitable temperature range, and may include a fridge, a freezer or a temperature-changing room classified by the use and/or the temperature range. The fridge may be maintained at a suitable temperature for keeping items refrigerated, and the freezer may be maintained at a suitable temperature for keeping items frozen. Refrigeration may refer to cooling the items to an extent that the items are not frozen, and for example, the fridge may be maintained at a range of 0 to 7 degrees Celsius above zero. Freezing may refer to freezing the items or cooling the items in a frozen state, and for example, the freezer may be maintained at a range of 20 to 1 degree Celsius below zero. The temperature-changing room may be used as one of the fridge or the freezer according to or regardless of the user's choice.

The storage chambers may be called many different names such as "veggie room", "fresh room", "cooling room" and "ice-making room" in addition to the names such as "fridge chamber", "freezer chamber" and "temperature-changing room", and the terms such as "fridge chamber", "freezer chamber" and "temperature-changing room" need to be understood as encompassing storage chambers having respective uses and temperature ranges.

In an embodiment of the disclosure, the refrigerator may include at least one door arranged to open or close the one open side of the storage chamber. A door may be equipped to open or close each of the one or more storage chambers, or one door may be equipped to open or close multiple storage chambers. The door may be rotationally or slidably installed at the front of the main body.

The door may be arranged to close the storage chamber tight when closed. Like the main body, the door may include insulation to insulate the storage chamber when closed.

In an embodiment of the disclosure, the door may include a door outer-plate that forms the front surface of the door, a door inner-plate that forms the rear surface of the door and faces the storage chamber, an upper cap, a lower cap and door insulation provided inside of them.

A gasket may be arranged on edges of the door inner-plate to seal the storage chamber by tightly contacting the front surface of the main body when the door is closed. The door inner-plate may include a dyke that protrudes rearward for a door basket that may keep items to be installed thereon.

In an embodiment of the disclosure, the door may include a door body and a front panel detachably coupled to the front side of the door body and forming the front of the door. The door body may include a door outer-plate that forms the front surface of the door body, a door inner-plate that forms the rear surface of the door body and faces the storage chamber, an upper cap, a lower cap and door insulation provided inside of them.

The refrigerator may be distinguished according to the layout of the door(s) and storage chamber(s) as a French door type, a side-by-side type, a bottom mounted freezer (BMF), a top mounted freezer (TMF) or a one-door refrigerator.

In an embodiment of the disclosure, the refrigerator may include a cold air supplier arranged to supply cold air into the storage chamber.

The cold air supplier may include a machine, instrument, electronic device and/or system that combines them, which is able to produce and lead cold air to cool the storage chamber.

In an embodiment of the disclosure, the cold air supplier may produce the cold air through a refrigeration cycle including processes of compression, condensation, expansion and evaporation of a refrigerant. For this, the cold air supplier may include a refrigeration cycle system having a compressor, a condenser, an expansion device and an evaporator that may operate the refrigeration cycle. In an embodiment of the disclosure, the cold air supplier may include semiconductors such as thermoelectric elements. The thermoelectric element may cool the storage chamber by heating and cooling actions through the Peltier effect.

In an embodiment of the disclosure, the refrigerator may include a machine room arranged for at least some parts belonging to the cold air supplier to be placed therein.

The machine room may be separated and insulated from the storage chamber to prevent heat generated from the parts arranged in the machine room from being transmitted to the storage chamber. To emit heat from the parts arranged in the machine room, the inside of the machine room may be formed to connect to the outside of the main body.

In an embodiment of the disclosure, the refrigerator may include a dispenser arranged at the door to provide water and/or ice. The dispenser may be located at the door for the user to make access thereto without a need to open the door.

In an embodiment of the disclosure, the refrigerator may include an ice maker provided to produce ice. The ice maker may include an ice maker tray for storing water, an ice separator for separating ice from the ice maker tray, and an ice bucket for storing ice produced from the ice maker tray.

In an embodiment of the disclosure, the refrigerator may include a controller for controlling the refrigerator.

The controller may include a memory for storing or memorizing a program and/or data for controlling the refrigerator, and a processor for outputting control signals to control components such as the cold air supplier according to the program and/or data stored in the memory.

The memory stores or records various information, data, instructions, programs, etc., required for operation of the refrigerator. The memory may store temporary data that is generated while the control signals to control the components included in the refrigerator are being generated. The memory may include at least one or a combination of volatile memories or non-volatile memories.

The processor controls general operation of the refrigerator. The processor may control the components of the refrigerator by executing the program stored in the memory. The processor may include an extra neural processing unit (NPU) that performs operation of an artificial intelligence (AI) model. The processor may also include a central processing unit (CPU), a graphic processing unit (GPU), etc. The processor may generate control signals to control operation of the cold air supplier. For example, the processor may receive information about the temperature in the storage chamber from a temperature sensor, and generate a refrigeration control signal to control an operation of the cold air supplier based on the temperature information of the storage chamber.

Furthermore, the processor may process a user input to a user interface according to the program and/or data memorized/stored in the memory, and control operation of the user interface. The user interface may be provided by using an input interface and an output interface. The processor may receive the user input from the user interface. Furthermore, the processor may send a display control signal and image data for displaying an image on the user interface to the user interface in response to the user input.

The processor and the memory may be provided in one unit or separately. The processor may include one or more processors. For example, the processor may include a main processor and at least one subprocessor. The memory may include one or more memories.

In an embodiment of the disclosure, the refrigerator may include a processor and a memory for controlling all the components included in the refrigerator, or include a plurality of processors and a plurality of memories for controlling the components of the refrigerator, respectively. For example, the refrigerator may include a processor and a memory for controlling operation of the cold air supplier according to the output of the temperature sensor. The refrigerator may include another processor and another memory for controlling operation of the user interface according to the user input.

A communication module (communication interface) may communicate with an external device such as a server, a mobile device, another home appliance, etc., through a nearby access point (AP). The AP may connect a local area network (LAN) connected to the refrigerator or user equipment to a wide area network (WAN) connected to the server. The refrigerator or user equipment may be connected to the server through the WAN.

The input interface may include a key, a touch screen, a microphone, etc. The input interface may receive a user input and forward it to the processor.

The output interface may include a display, a speaker, etc. The output interface may output various notifications, alert, messages, information, etc., generated by the processor.

A refrigerator according to various embodiments will now be described in detail in connection with the accompanying drawings.

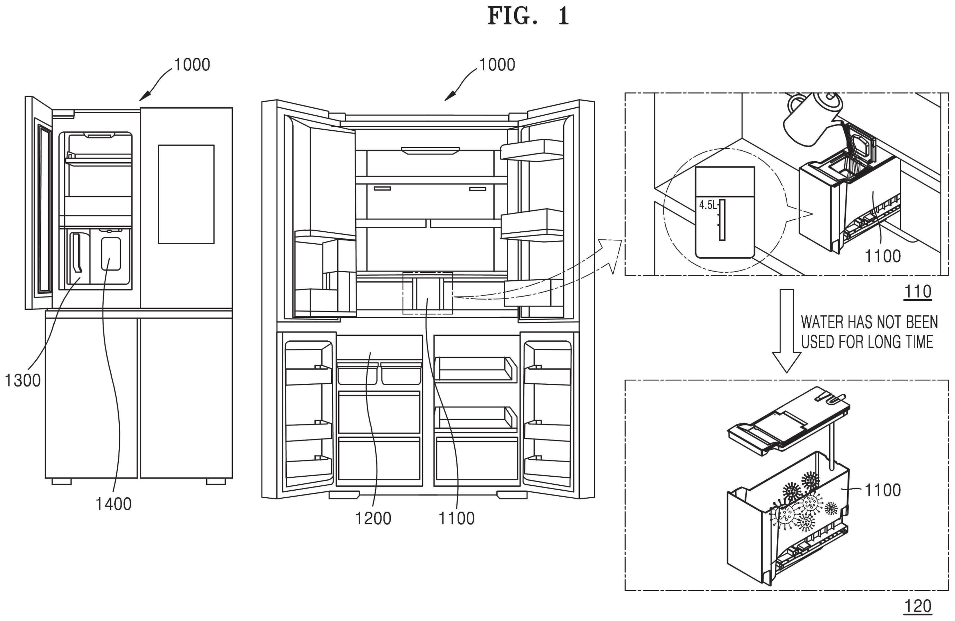

FIG. 1 is a diagram for describing a water supply system of a refrigerator 1000, according to an embodiment of the disclosure.

Referring to FIG. 1, the refrigerator 1000 may include a water tank 1100 for storing water to be supplied to at least one water supply system. The water tank 1100 may be located in a certain space of a fridge chamber. The water tank 1100 may be located between storage chambers (e.g., multi-pantries) or at a side of a storage chamber.

A maximum amount of water to be stored in the water tank 1100 may be about 4.5ℓ, but is not limited thereto. As the water is supplied to the at least one water supply system, the amount of water stored in the water tank 1100 may be reduced.

The water supply system is a device that operates with water received from the water tank 1100, and may include, for example, at least one of an ice maker 1200, an autofill device 1300 or a dispenser 1400 without being limited thereto. Depending on the product model, the refrigerator 1000 may include only the ice maker 1200 or may include all the ice maker 1200, the autofill device 1300 and the dispenser 1400.

The ice maker 1200 may include an ice maker tray on which water for ice making is stored and ice is made, an ice separator for separating the ice made on the ice maker tray, an ice separation motor for rotating the ice separator, an ice maker cover for leading ice separated from the ice maker tray to an ice storage (hereinafter, referred to as an ice storage container), a slider for preventing the ice separated from the ice maker tray from returning to the ice maker tray, etc., without being limited thereto. The ice maker tray may include a plurality of ice maker cells, and when the water stored in the water tank 1100 is supplied to the ice maker tray, each of the ice maker cells may store the water for ice making. The ice separator is arranged over the ice maker tray, and may separate ice from the ice maker tray after the ice is made. The ice separation motor generates rotational force to rotate the ice separator clockwise or counterclockwise.

The autofill device 1300 may include a small water tank for storing automatically supplied water. The small water tank may also be called an autofill water tank. The user may take out the small water tank from the refrigerator 1000 to drink cool water. The small water tank included in the autofill device 1300 may include an infuser into which a teabag may be put.

The autofill device 1300 may include a water tank sensor for detecting whether the small water tank (autofill water tank) is mounted, and a water level sensor for detecting a water level in the small water tank. When the water tank sensor detects that the small water tank is mounted, water may be automatically supplied into the autofill device 1300 from the water tank 1100 so that the small water tank is filled with a certain amount of water. When the water tank sensor detects that the small water tank (autofill water tank) is not mounted, water supply from the water tank 1100 into the autofill device 1300 may be blocked.

In the meantime, when the water tank sensor detects that the certain amount of water is stored in the small water tank (autofill water tank), water supply from the water tank 1100 into the autofill device 1300 may be blocked. On the other hand, when the water tank sensor detects that the certain amount of water is not stored in the small water tank (autofill water tank), water may be supplied into the autofill device 1300 from the water tank 1100. When the autofill function is activated, the at least one processor of the refrigerator 1000 may control the water supply pump to maintain the certain amount of water in the small water tank (autofill water tank).

The dispenser 1400 may be a device for providing purified water and/or ice. The dispenser 1400 may include a water collection space and an operation lever. The dispenser 1400 may supply water into the water collection space in response to a manual operation of the operation lever. For example, when the user presses the operation lever, the at least one processor of the refrigerator 1000 may control the water in the water tank 1100 to be supplied into the dispenser 1400 so that the water may flow into the water collection space through a nozzle of the dispenser 1400.

As the water supply system (e.g., the ice maker 1200, the autofill device 1300 or the dispenser 1400) is a device that operates with water received from the water tank 1100, the water tank 1100 needs to be filled with water for the user to use the water supply system. Hence, the user may fill the water tank 1100 with water when there is no water in the water tank 1100. For example, referring to 110 of FIG. 1, the user may open a water inlet cover located on the top of the water tank 1100 and pour water into the water tank 1100 through a water inlet.

When the user does not use the water supply system for a long time after storing water in the water tank 1100, the water stored in the water tank 1100 may be contaminated. For example, referring to 120 of FIG. 1, when the water in the water tank 1100 does not flow out of the water tank 1100 for a long time, the remaining water goes moldy or the water tank 1100 or a hose is incrusted with slime, which may be insanitary.

Hence, according to an embodiment of the disclosure, when detecting that water in the water tank 1100 has not been discharged for at least a certain period of time with the use of a water detection sensor for detecting water in the water tank 1100, the refrigerator 1000 may control the pump to discharge the water of the water tank 1100 onto an evaporation tray in the machine room such that the water may be naturally evaporated from the evaporation tray. In this case, the refrigerator 1000 discharges the water from the water tank 1100 onto the evaporation tray through a discharge path for defrost water, so there is no need to significantly change the device structure.

In an embodiment of the disclosure, the refrigerator 1000 may first determine whether the water supply system is possible to receive water before discharging water from the water tank 1100 onto the evaporation tray. When there is a room to receive water in the water supply system, the refrigerator 1000 may discharge the remaining water onto the evaporation tray in the machine room after supplying water into the water supply system first.

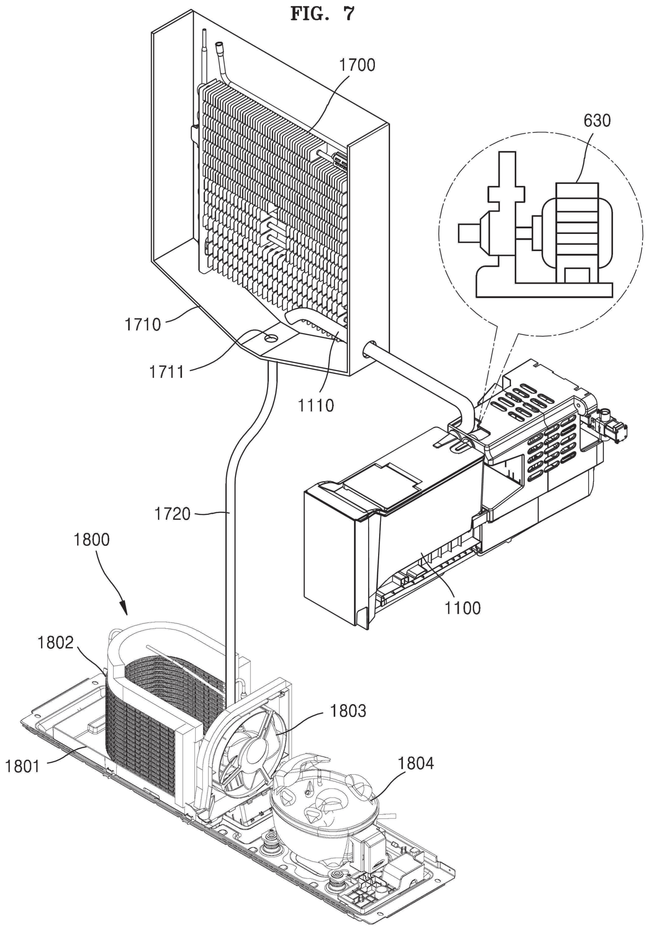

In other words, in an embodiment of the disclosure, the refrigerator 1000 may force the water stored in the water tank 1100 to be discharged into the water supply system or onto the evaporation tray after a lapse of a certain period of time in order to prevent contamination or proliferation due to the remaining water or stagnant water. The operation of the refrigerator 1000 forcing the water stored in the water tank 1100 to be discharged will be described later in detail with reference to FIG. 7.

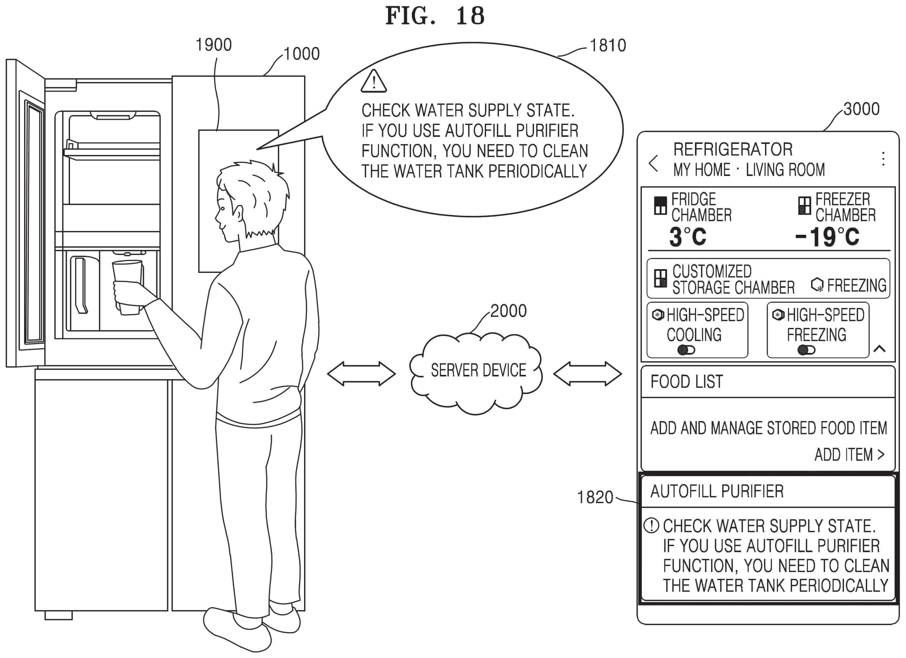

In the meantime, when the pump operates to supply water into the water supply system while there is no water in the water tank 1100 after the water tank 1100 is emptied, the pump motor is rapidly heated so that it is more likely to be short-lived or damaged. For example, when the user presses the operation lever of the dispenser 1400 or activates the ice making function and/or autofill function while there is no water in the water tank 1100, the refrigerator 1000 may automatically try water supplying into the dispenser 1400, the ice maker 1200 or the autofill device 1300, making the pump motor broken or damaged and causing the noise of the pump motor to grow louder. Hence, in an embodiment of the disclosure, the refrigerator 1000 may detect that there is no water in the water tank 1100 and notify the user of this, prompting the user to fill the water tank 1100 with water. The operation of the refrigerator 1000 providing alert to replenish the water tank 1100 with water will be described later in detail with reference to FIG. 18.

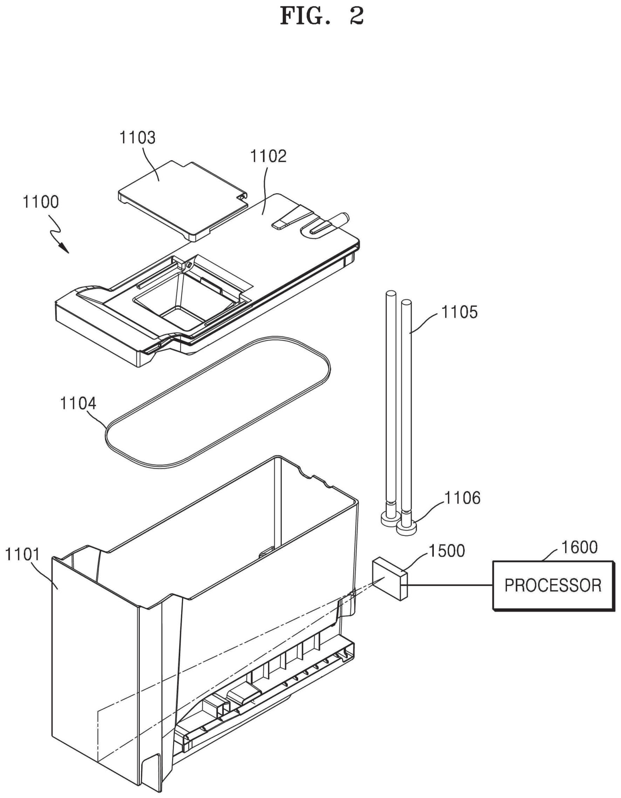

The water tank 1100 and the water detection sensor for detecting water stored in the water tank 1100 will now be described in more detail in connection with FIGS. 2 to 5.

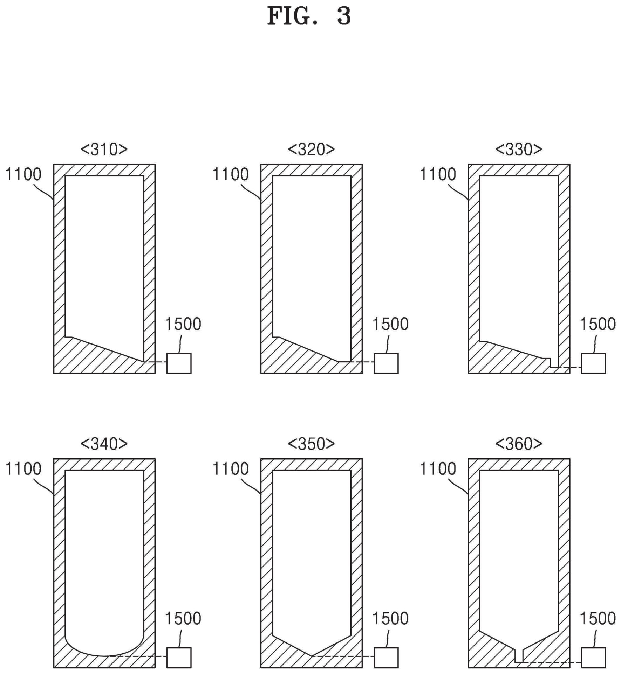

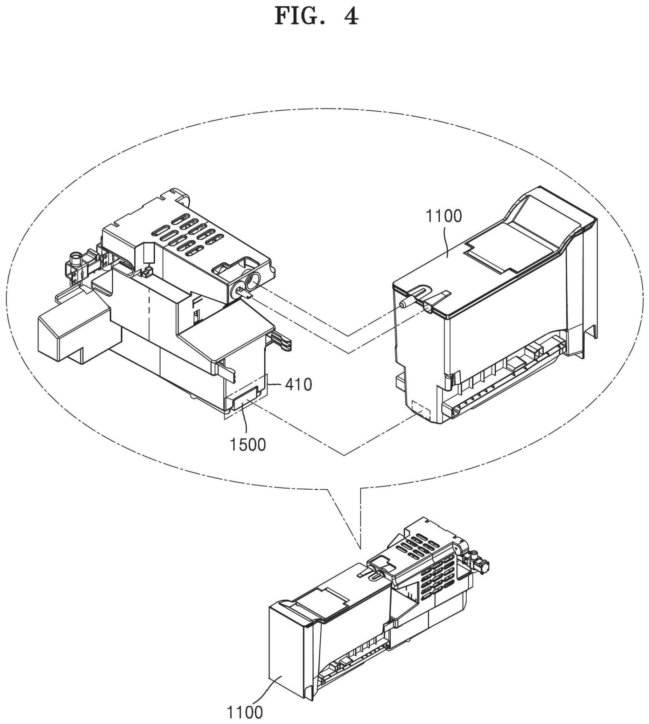

FIG. 2 is a diagram for describing the water tank (1100) and a water detection sensor 1500, according to an embodiment of the disclosure. FIG. 3 is a diagram for describing bottom shapes of the water tank 100, according to an embodiment of the disclosure. FIG. 4 is a diagram for describing a position of the water detection sensor 1500, according to an embodiment of the disclosure.

Referring to FIG. 2, in an embodiment of the disclosure, the refrigerator 1000 may include the water tank 1100, the water detection sensor 1500 and at least one processor 1600, but is not limited thereto. The refrigerator 1000 may be implemented with more components than shown in FIG. 2.

The respective components will now be described.

The water tank 1100 may include a body 1101, a top cover 1102, a water inlet cover 1103, a gasket 1104, a hose 1105, a filter 1106, etc., without being limited thereto. The body 1101 may include a storage room for storing water. The storage room may receive up to 4.5 ℓ of water, but is not limited thereto.

The water inlet cover 1103 may be arranged in a portion of the top cover 1102. The user may fill the storage room with water by opening the water inlet cover 1103 and pouring water through the water inlet. The gasket 1104 may be a sealing gasket for coupling the water tank body 1101 with the top cover 1102.

The hose 1105 may be a tube for supplying water into the water supply system. The hose 1105 may be provided in the plural depending on the type of the water supply system. For example, the hose 1105 may include a first hose for supplying water into the ice maker 1200 and a second hose for supplying water into the autofill device 1300 or the dispenser 1400, but is not limited thereto. In an embodiment of the disclosure, the hose 1105 may include a third hose (also referred to as a water tank hose) for discharging water onto a drain plate of an evaporator. Hereinafter, the hose 1105 may also be referred to as a nozzle.

The filter 1006 is to filter out foreign materials in the water stored in the water tank 1100. When there are the plurality of hoses 1105, the filter 1106 may be provided in the plural as well.

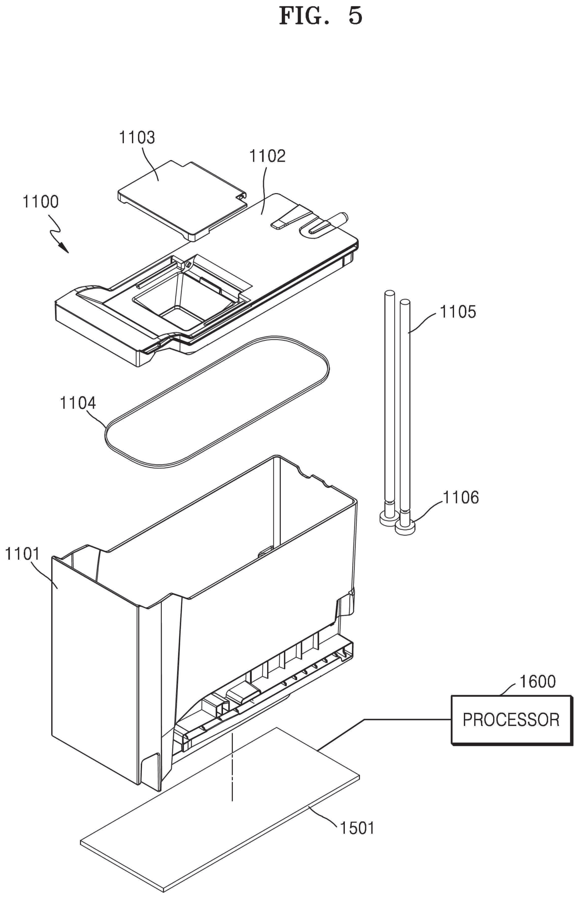

The water detection sensor 1500 may be a sensor for detecting water stored in the water tank 1100. The water detection sensor 1500 may also be referred to as a water level sensor. The water detection sensor 1500 may be a non-contact type sensor or a contact type sensor. The non-contact type sensor may include a capacitive sensor or a weight detection sensor, without being limited thereto. A case that the water detection sensor 1500 is the weight detection sensor (e.g., a load cell) will be described later with reference to FIG. 5, and a case that the water detection senor 1500 is the capacitive sensor will be described with reference to FIGS. 2 to 4.

The water detection sensor 1500 may be arranged at a location corresponding to a bottom portion of the water tank 1100. In an embodiment of the disclosure, when there is a step on the bottom of the water tank 1100, the water detection sensor 1500 may be arranged at a location corresponding to a lowest part of the bottom portion of the water tank 1100.

Referring to FIG. 3, the inside of the bottom portion of the water tank 1100 may have various shapes, so that the remaining water in the water tank (1100) is minimized and even when the amount of the remaining water in the water tank 1100 is so small, the remaining water can be detected to reduce false detection for the water in the water tank 1100. For example, the inside of the bottom of the water tank 1100 may be sloped (e.g., 310, 320 and 330), spherical (e.g., 340), convex-downward (e.g., 340, 350 and 360), or funnel-shaped (330 and 360), without being limited thereto if an area of the inside of the bottom portion on a plane of which the normal direction is parallel to the gravity direction is smaller than an area of the inside of other portions of the water tank 1100. By arranging the water detection sensor 1500 at a location corresponding to the lowest of the bottom portion of the water tank 1100, false detection for the remaining water in the water tank 1100 may be minimized.

Referring to FIG. 4, the water detection sensor 1500 may be arranged at a lower end 310 of a first surface that comes into contact with the rear side of the water tank 1100 when the water tank 1100 is mounted in the refrigerator 1000. The water detection sensor 1500 arranged at the lower end 310 of the first surface may identify whether there is water in the water tank 1100 accommodated in the refrigerator 1000 by detecting a change in capacitance. The water detection sensor 1500 may send a signal indicating that water is detected in the water tank 1100 or a signal indicating that water is not detected in the water tank 1100 to the at least one processor 1600. When the water detection sensor 1500 detects no water, it may mean that there is no remaining water in the water tank 1100 as the water detection sensor 1500 is arranged at a location corresponding to the lowest of the bottom of the water tank 1100. On the other hand, when the water detection sensor 1500 detects water, it may mean that there is remaining water in the water tank 1100.

Turning back to FIG. 2, the refrigerator 1000 may include at least one processor 1600. The refrigerator 1000 may include one or multiple processors. For example, the refrigerator 1000 may include a main processor and a subprocessor. The at least one processor 1600 may control general operation of the refrigerator 1000. For example, when water stored in the water tank 1100 is detected for at least a certain period of time by the water detection sensor 1500, the at least one processor 1600 may control the pump to discharge the water stored in the water tank 1100 onto the evaporation tray under the condenser in the machine room by using a discharge path for defrost water. The operation of the at least one processor 1600 using the discharge path for defrost water to discharge water stored in the water tank 1100 onto the evaporation tray will be described later in detail with reference to FIG. 7.

In the disclosure, the at least one processor 1600 may include at least one of a central processing unit (CPU), a graphics processing unit (GPU), an accelerated processing unit (APU), many integrated cores (MIC), a digital signal processor (DSP) or a neural processing unit (NPU). The at least one processor 1600 may be implemented in the form of a system on chip (SoC) with one or more electronic components integrated therein. Each of the at least one processor 1600 may be implemented in separate hardware (H/W). The at least one processor 1600 may also be referred to as a microcomputer, microprocessor computer or microprocessor controller (MICOM), a micro processor unit (MPU), or a micro controller unit (MCU).

In the disclosure, the at least one processor 1600 may be implemented with a single core processor or a multi-core processor.

The water detection sensor 1500 of the weight detection type will now be described in connection with FIG. 5.

FIG. 5 is a diagram for describing the water detection sensor 1500, according to an embodiment of the disclosure.

Referring to FIG. 5, the water detection sensor 1500 may include a weight detection sensor 1501. Hereinafter, the weight detection sensor 1501 may also be referred to as a load cell.

The weight detection sensor 1501 may be arranged at a location where the bottom side of the water tank 1100 is settled when the water tank 1100 is accommodated in the refrigerator 1000. Hence, the bottom side of the water tank 1100 may be designed to have a structure that may tightly contact the weight detection sensor 1501 (e.g., load cell). The weight detection sensor 1510 may detect whether there is water in the water tank 1100 by detecting the weight of the water tank 1100 that stores water.

The weight detection sensor 1501 may send a signal indicating that water is detected in the water tank 1100 or a signal indicating that water is not detected in the water tank 1100 to the at least one processor 1600.

In the meantime, although not shown in FIGS. 2 to 5, a distance detection sensor may be arranged at the top cover 1102. In this case, the distance detection sensor may identify a change in water level in the water tank 1100 by measuring a distance from the top cover 1102 to the water stored in the water tank 1100. The distance detection sensor may include at least one of a photo sensor (e.g., a time of flight (ToF) sensor), a position sensitive device (PSD), a lidar sensor or an ultrasonic sensor, but is not limited thereto.

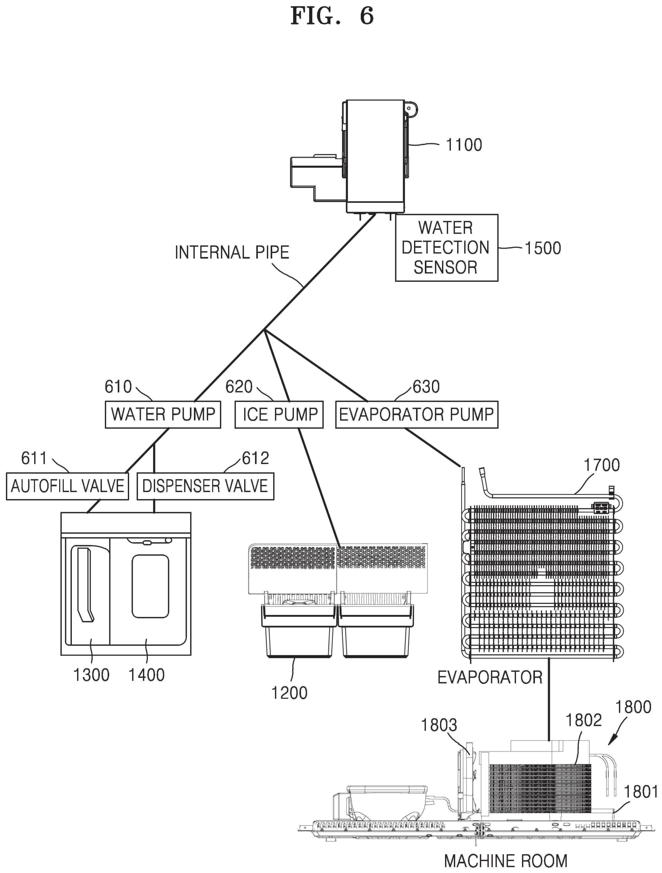

FIG. 6 is a diagram for describing a system for discharging water from the water tank 1100, according to an embodiment of the disclosure.

The water tank 1100 may be connected to the autofill device 1300, the dispenser 1400, the ice maker 1200 or an evaporator 1700 through internal pipes.

When the autofill function is activated, the at least one processor 1600 of the refrigerator 1000 may control a water pump 610 to maintain a certain amount of water in the autofill device 1300. For example, when water is not filled up to a reference line of the small water tank included in the autofill device 1300, the at least one processor 1600 of the refrigerator 1000 may operate the water pump 610. In this case, the water stored in the water tank 1100 may be supplied to the autofill device 1300 through an autofill valve 611. Hereinafter, a state in which water is filled up to the reference line of the small water tank may be referred to as 'being full of water'.

The at least one processor 1600 of the refrigerator 1000 may control the water pump 610 to supply water to the dispenser 1400 according to the user's lever operation. For example, when the user presses the lever, the at least one processor 1600 of the refrigerator 1000 may operate the water pump 610. In this case, the water stored in the water tank 1100 may be supplied to the dispenser 1400 through a dispenser valve 612.

The at least one processor 1600 of the refrigerator 1000 may control an ice pump 620 to maintain a certain amount of ice in the ice storage container, when an automatic ice making function is activated. For example, when less than the certain amount of ice is filled in the ice storage container, the at least one processor 1600 of the refrigerator 1000 may operate the ice pump 620. In this case, the water stored in the water tank 1100 may be supplied onto the ice maker tray. Hereinafter, a state in which ice is filled up to the maximum capacity in the ice storage container may be referred to as 'being full of ice'.

When water of the water tank 1100 is not discharged for at least a certain period of time, the at least one processor 1600 of the refrigerator 1000 may control an evaporator pump 630 to discharge the water of the water tank 1100 onto an evaporation tray 1801 in a machine room 1800 through a discharge path for defrost water. For example, when the water of the water tank 1100 remains in the water tank 1100 for at least a certain period of time (e.g., 30 hours) without being supplied into the ice maker 1200, the autofill device 1300 or the dispenser 1400, the at least one processor 1600 of the refrigerator 1000 may operate the evaporator pump 630 to discharge the water of the water tank 1100 onto the evaporation tray 1801 under the condenser 1802 in the machine room 1800 through a drain plate of the evaporator 1700. The water discharged onto the evaporation tray 1801 may be naturally evaporated by heat generated from the condenser 1802 and wind produced by an air blowing fan 1803.

Hereinafter, the evaporator pump 630 may be referred to as a first pump, the ice pump 620 a second pump, and the water pump 610 a third pump.

Referring to FIG. 7, the operation of the refrigerator 1000 discharging the remaining water in the water tank 1100 onto the evaporation tray 1801 in the machine room 1800 through a discharge path for defrost water will now be described in more detail.

FIG. 7 is a diagram for describing a system for discharging water from the water tank 1100 onto the evaporation tray 1801, according to an embodiment of the disclosure.

When the water stored in the water tank 1100 is detected for at least a certain period of time by the water detection sensor 1500, the refrigerator 1000 may control the first pump to discharge the water stored in the water tank 1100 onto the evaporation tray 1801 under the condenser 1802 in the machine room 1800 by using a discharge path for defrost water.

The discharge path for defrost water may include a drain tube 1720 connected from a drain plate 1710 under the evaporator 1700 to the evaporation tray 1801 in the machine room 1800. The drain tube 1720 may also be referred to as a drain hose. The drain tube 1720 may be formed as a corrugated hose with circular pleats or may be formed as a corrugated hose with spiral pleats.

The drain tube 1720 may be arranged as one or multiple sections. The drain tube 1720 may lead defrost water produced in the evaporator 1700 to be moved to the machine room 1800. The defrost water may be moved to the bottom side of the machine room 1800 through the drain tube 1720. The evaporation tray 1801, to which the defrost water flows in, may be located on the bottom side of the machine room 1800.

The machine room 1800 may include a compressor 1804, the condenser 1802 and the air blowing fan 1803, without being limited thereto. The compressor 1804 compresses the refrigerant into a high temperature and high pressure state. The compressor 1804 may compress a refrigerant gas to have high temperature and high pressure by using the rotational force of the electric motor after receiving external electric energy. The compressor 1804 may be connected to the condenser 1802 to move the compressed refrigerant to the condenser 1802. The compressor 1804 operates a refrigeration cycle of compression, condensation and evaporation by compressing and pushing the refrigerant into the condenser 1802. Accordingly, with the operation of the compressor 1804, the cold air produced in the evaporator 1700 is supplied into the storage chamber.

The condenser 1802 condenses the high temperature and high pressure refrigerant compressed from the compressor 1804. The condenser 1802 may emit heat generated while condensing the refrigerant. The refrigerant condensed while passing through the condenser 1802 is moved to the expansion valve. The refrigerant condensed in the condenser 1802 turns into a low temperature and low pressure liquid state while passing through the expansion valve. The refrigerant liquid passes through the expansion valve and is moved to the evaporator 1700.

The evaporator 1700 evaporates the low temperature and low pressure refrigerant liquid that has passed through the expansion valve. In the evaporator 1700, the refrigerant liquid exchanges heat with surrounding air while being evaporated. The refrigerant liquid absorbs surrounding latent heat, causing the air around the evaporator 1700 to be cooled and thus producing cold air. The completely evaporated refrigerant is supplied back to the compressor 1804, going through the refrigeration cycle. A heater may be arranged around the evaporator 170 to remove frost formed on the evaporator 1700.

Referring to FIG. 7, a water tank hose 1110 for discharging water from the water tank 1100 may be connected to the drain plate 1710 under the evaporator 1700. The drain plate 1710 under the evaporator 1700 may be a plate where defrost water produced while the heater around the evaporator 1700 operates is collected. The drain plate 1710 may include a drain hole 1711.

The at least one processor 1600 of the refrigerator 1000 may operate the first pump (evaporator pump) 630 to move the water in the water tank 1100 to the drain plate 1710 under the evaporator 1700 through the water tank hose 1110. The water tank 1100 may be located lower than the evaporator 1700. The water discharged from the water tank 1100 to the drain plate 1710 through the water tank hose 1110 may flow into the drain tube 1720 through the drain hole 1711 of the drain plate 1710 and arrive at the evaporation tray 1801. In other words, the remaining water in the water tank 1100 may be discharged onto the evaporation tray 1801 in the machine room 1800 by using the discharge path for the defrost water. Accordingly, in an embodiment of the disclosure, when the water in the water tank 1100 is not used for a long time, the at least one processor 1600 of the refrigerator 1000 may prevent the water tank 1100 from being contaminated by e.g., mold by discharging the remaining water in the water tank 1100 onto the evaporation tray 1801.

The water discharged onto the evaporation tray 1801 may be naturally evaporated by the heat generated from the condenser 1802 and wind produced by the air blowing fan 1803. Accordingly, user convenience may increase because there is no need for the user to throw away the water collected on the evaporation tray 1801.

In an embodiment of the disclosure, the at least one processor 1600 of the refrigerator 1000 may control revolutions per minute (rpm) of the air blowing fan 1803 in the machine room 1800 to a maximum level as the water stored in the water tank 1100 is discharged onto the evaporation tray 1801. In the case that the rpm of the air blowing fan 1803 is controlled to the maximum level, the water discharged onto the evaporation tray 1801 may be evaporated more quickly.

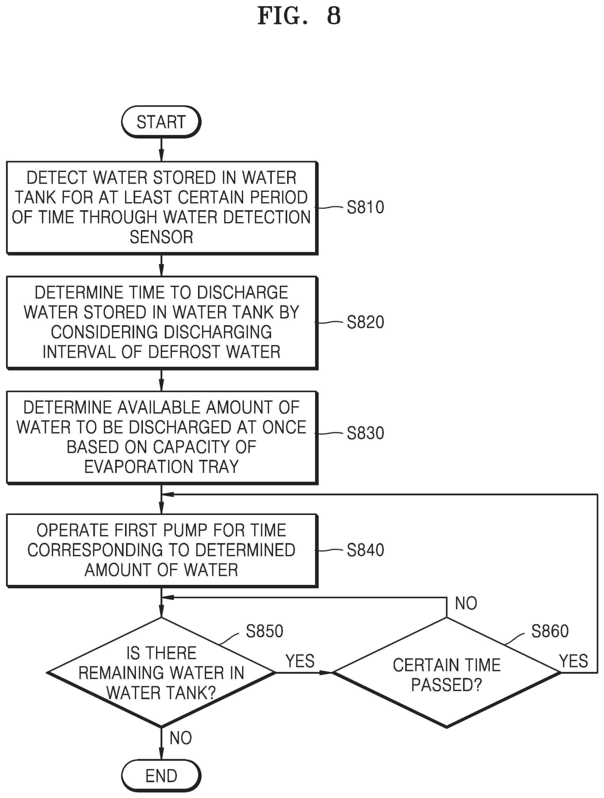

A way that the at least one processor 1600 of the refrigerator 1000 determines a time to discharge or amount of discharging water stored in the water tank 1100 will now be described in detail with reference to FIG. 8.

FIG. 8 is a flowchart for describing a method of determining a time to discharge or amount of discharging water stored in the water tank 1100, according to an embodiment of the disclosure.

In operation S810, the refrigerator 1000 may detect with the water detection sensor 1500 the water stored in the water tank 1100 for at least a certain period of time.

For example, when the water detection sensor 1500 arranged at a location corresponding to a lowest part of the bottom portion of the water tank 1100 continues to detect water for at least a certain period of time (e.g., 24 hours), the at least one processor 1600 of the refrigerator 1000 may determine that the water has not been completely discharged from the water tank 1100 and has been stored there for a long time (e.g., at least 24 hours). In this case, the at least one processor 1600 of the refrigerator 1000 may determine that the water needs to be discharged from the water tank 1100 onto the evaporation tray 1801 to prevent contamination of the water tank 1100 or the water in the water tank 1100.

In operation S820, the refrigerator 1000 may determine a time to discharge the water stored in the water tank 1100 in consideration of discharging intervals of defrost water.

In an embodiment of the disclosure, the water in the water tank 1100 is discharged onto the evaporation tray 1801 through the discharge path for defrost water, so the time to discharge the water stored in the water tank 1100 may be determined by taking into account the discharging intervals of the defrost water. In other words, the at least one processor 1600 of the refrigerator 1000 may control a time to operate the defrost heater and a time to operate the first pump 630 to discharge the remaining water from the water tank 1100 not to overlap each other. For example, the at least one processor 1600 of the refrigerator 1000 may operate the defrost heater and the first pump 630 alternately, but is not limited thereto.

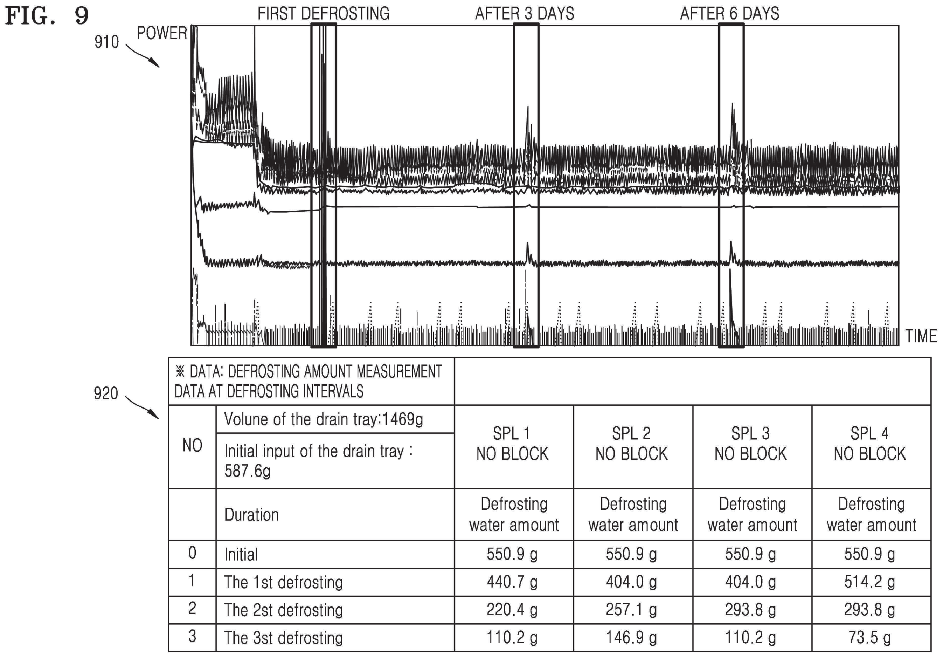

Referring to a graph 910 of FIG. 9, the refrigerator 1000 may discharge the defrost water every three days on average. In other words, the at least one processor 1600 of the refrigerator 1000 may discharge the defrost water by operating the defrost heater every three days. Referring to a table 920 of FIG. 9, an initial defrost amount may be about 500 g, but the subsequent defrost amount may dwindle down to about 110 g after third defrosting. Water has not been stored for at least a certain period of time in the initial stage, so when to discharge the remaining water does not matter, but after second defrosting, the defrost amount is not much and the defrost water may be evaporated from the evaporation tray 1801 within 24 hours. Accordingly, the at least one processor 1600 of the refrigerator 1000 may operate the first pump 630 to discharge the remaining water from the water tank 1100 24 hours after operating the defrost heater, in consideration of the discharging intervals of the defrost water.

In the meantime, after the third defrosting, the defrost amount is not much but about 110 g, so when the amount to be discharged onto the evaporation tray 1801 at once is determined to be small, the refrigerator 1000 may determine a time to discharge the remaining water without much consideration for the defrost intervals. In this case, operation S820 may be skipped.

In operation S830, the refrigerator 1000 may determine an available amount of water to be discharged at once based on the capacity of the evaporation tray 1801.

In an embodiment of the disclosure, the capacity of the water tank 1100 may be greater than that of the evaporation tray 1801. In this case, when the water stored in the water tank 1100 is discharged at once to the evaporation tray 1801, the water may overflow in the machine room 1800, so the at least one processor 1600 of the refrigerator 1000 may determine an available amount of water to be discharged at once based on the capacity of the evaporation tray 1801.

For example, when the capacity of the evaporation tray 1801 is 1.5 ℓ, the at least one processor 1600 of the refrigerator 1000 may determine the available amount of water to be discharged at once to be less than 1.5 ℓ. For example, the at least one processor 1600 of the refrigerator 1000 may determine the available amount of water to be discharged at once to be 1 ℓ.

In an embodiment of the disclosure, the refrigerator 1000 may determine the available amount of water to be discharged at once by further considering the defrost amount. For example, when the capacity of the evaporation tray 1801 is 1.5 ℓ and the defrost amount is 100 g, the at least one processor 1600 may determine the available amount of water to be discharged at once to be less than 1.4 ℓ.

In operation S840, the refrigerator 1000 may operate the first pump 630 for a period of time corresponding to the determined amount of water. The first pump 630 may be a pump for discharging the water from the water tank 1100 onto the evaporation tray 1801. When the first pump 630 operates, the water in the water tank 1100 may be moved to the drain plate 1710 under the evaporator 1700, and the water moved to the drain plate 1710 may flow into the drain tube 1720 through the drain hole 1711 at the drain plate 1710 and may be moved to the evaporation tray 1801.

In an embodiment of the disclosure, the at least one processor 1600 of the refrigerator 1000 may operate the first pump 630 for a time corresponding to the available amount of water to be discharged at once. For example, when the available amount of water to be discharged at once is 1 ℓ, the at least one processor 1600 of the refrigerator 1000 may operate the first pump 630 for 2 minutes, and when the available amount of water to be discharged at once is 1.2 ℓ, the at least one processor 1600 of the refrigerator 1000 may operate the first pump 630 for 2 minutes and 20 seconds. The numerical values herein are merely an example, and the disclosure is not limited thereto.

In operation S850, the refrigerator 1000 may determine whether there is remaining water in the water tank 1100.

In an embodiment of the disclosure, the at least one processor 1600 of the refrigerator 1000 may operate the first pump 630 for the time corresponding to the available amount of water to be discharged at once, and then determine whether there is remaining water in the water tank 1100. For example, the at least one processor 1600 of the refrigerator 1000 may determine whether water continues to be detected by the water detection sensor 1500 arranged at a location corresponding to the bottom portion of the water tank 1100. When the water is detected by the water detection sensor 1500, the at least one processor 1600 may determine that there is remaining water in the water tank 1100. On the other hand, when the water is not detected by the water detection sensor 1500, the at least one processor 1600 may determine that there is no remaining water in the water tank 1100.

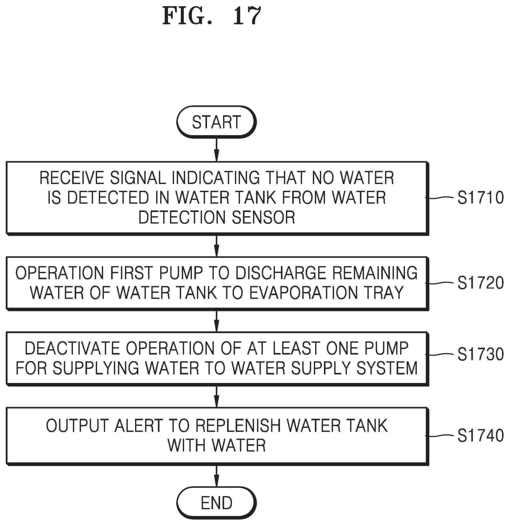

The at least one processor 1600 may no longer operate the first pump 630 when there is no remaining water in the water tank in operation S850. In the meantime, when there is no remaining water in the water tank 1100, the at least one processor 1600 may deactivate the operation of the pump (e.g., the water pump or the ice pump) for supplying water into the water supply system. Furthermore, the at least one processor 1600 may output an alert to replenish the water tank 1100 with water. The operation of the refrigerator 1000 when there is no remaining water in the water tank 1100 will be described in more detail later with reference to FIG. 17.

When there is remaining water in the water tank 1100 in operation S850, the refrigerator 1000 may determine whether a certain period of time elapses from when the first pump 630 operates in operation S860. The certain period of time may be a time required for the water discharged onto the evaporation tray 1801 to be evaporated entirely.

For example, the amount to be discharged at once to the evaporation tray 1801 from the water tank 1100 may be determined to be 1 ℓ, and it may require 12 hours to evaporate 1 ℓ entirely. In this case, the at least one processor 1600 of the refrigerator 1000 may determine whether 12 hours have passed since the water of 1 ℓ was first discharged to the evaporation tray 1801.

The at least one processor 1600 of the refrigerator 1000 may keep monitoring whether there is remaining water in the water tank 1100 without re-operating the first pump 630, when the certain period of time is not passed from when the first pump 630 operates in operation S860.

When the certain period of time is not passed from when the first pump 630 operates in operation S860, the at least one processor 1600 of the refrigerator 1000 may determine that the water discharged onto the evaporation tray 180 has evaporated entirely, and discharge the remaining water from the water tank 1100 again. For example, the at least one processor 1600 of the refrigerator 1000 may operate the first pump 630 again for a time corresponding to the available amount of water to be discharged at once.

In other words, in an embodiment of the disclosure, the at least one processor 1600 of the refrigerator 1000 may operate the first pump 630 multiple times at certain time intervals, when the water stored in the water tank 1100 exceeds the available amount of water to be discharged at once. For example, when the water stored in the water tank 1100 is 4 ℓ and the available amount of water to be discharged at once is 1 ℓ, the at least one processor 1600 may operate the first pump 630 four times at the certain time intervals.

In an embodiment of the disclosure, the evaporation tray 1801 may include an overflow sensor. The at least one processor 1600 may control the first pump 630 to block discharging to the evaporation tray 1801 when detecting through the overflow sensor that a certain amount of water is collected on the evaporation tray 1801. In the case that the overflow sensor is included in the evaporation tray 1801, the at least one processor 1600 has only to operate the first pump 630 according to a signal from the overflow sensor without a need to determine the available amount of water to be discharged at once, so operations S830 and S840 of FIG. 8 may be skipped.

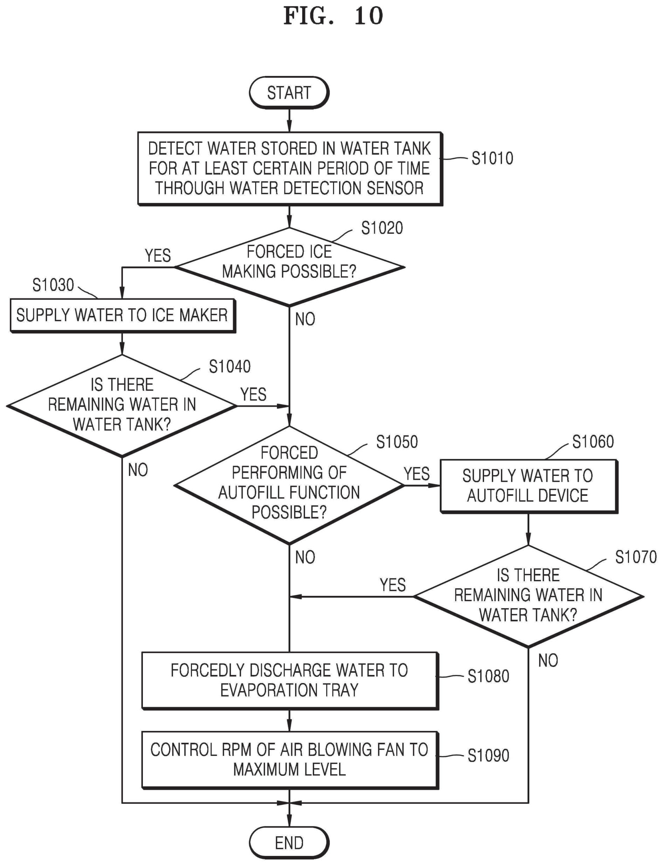

An operation of the refrigerator 1000 first supplying water into the water supply system (e.g., the ice maker 1200 or the autofill device 1300) before discharging the water to the evaporation tray 1801 from the water tank 1100 will now be described in connection with FIGS. 10 to 12.

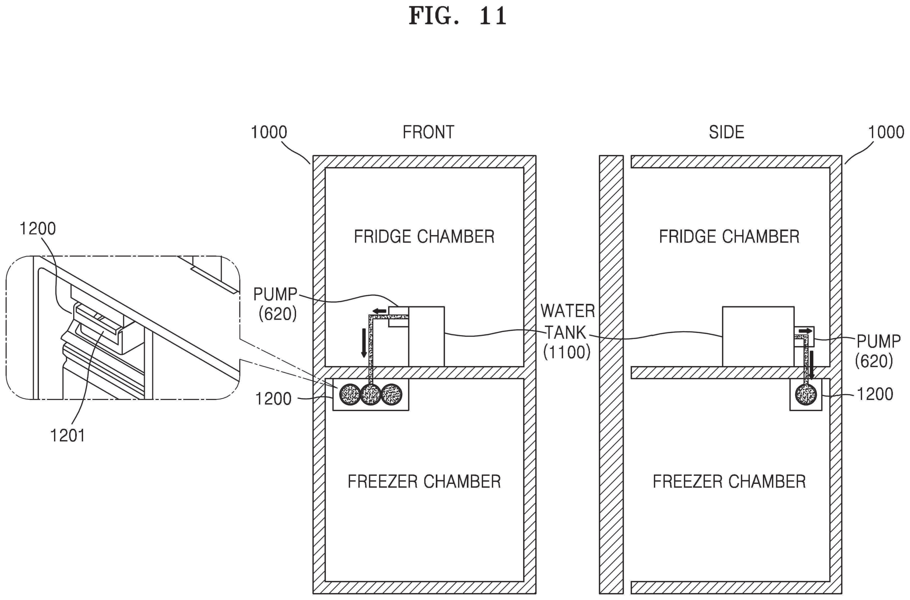

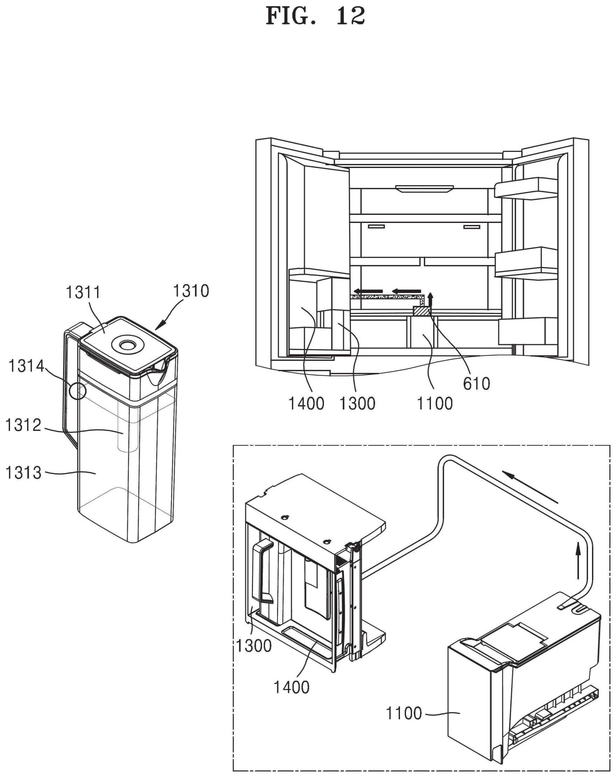

FIG. 10 is a flowchart for describing a way of discharging water from the water tank 1100, according to an embodiment of the disclosure. FIG. 11 is a diagram for describing an operation of supplying water from the water tank 1100 to the ice maker 1200, according to an embodiment of the disclosure. FIG. 12 is a diagram for describing an operation of supplying water to the autofill device 1300 from the water tank 1100, according to an embodiment of the disclosure.

In operation S1010, the refrigerator 1000 may detect with the water detection sensor 1500 the water stored in the water tank 1100 for at least a certain period of time.

In an embodiment of the disclosure, when the water detection sensor 1500 arranged at a location corresponding to a lowest part of the bottom portion of the water tank 1100 continues to detect water for at least a certain period of time (e.g., 30 hours), the at least one processor 1600 of the refrigerator 1000 may determine that the water has not been completely discharged from the water tank 1100 and has been stored there for a long time (e.g., at least 30 hours).

In an embodiment of the disclosure, the at least one processor 1600 of the refrigerator 1000 may determine whether at least one water supply system is possible to receive water when the water stored in the water tank 1100 is detected for at least a certain period of time through the water detection sensor 1500. When the at least one water supply system is possible to receive water, the at least one processor 1600 may supply at least a portion of the water stored in the water tank 1100 into the at least one water supply system before discharging the water in the water tank 1100 to the evaporation tray 1801.

In operation S1020, the refrigerator 1000 may determine whether forced ice making is possible, when the water stored in the water tank 1100 is detected for at least the certain period of time. A state in which forced ice making is possible may include a state in which the ice storage container is not full of ice.

In an embodiment of the disclosure, the ice maker 1200 may include a full-ice detection sensor for detecting full ice stored in the ice storage container. The detecting of the full ice may refer to detecting whether the ice storage container is filled with ice to the maximum capacity.

In an embodiment of the disclosure, the full-ice detection sensor may be implemented in the form of a detection lever that detects physical contact of ice at an upper end portion of the ice storage container. For example, whether the ice storage container is full of ice may be detected while a bar with the full-ice detection sensor attached thereto is going down during an ice separating operation. In this case, the full-ice detection sensor may include a hall sensor.

In an embodiment of the disclosure, the full-ice detection sensor may include a light emitter for irradiating light toward the ice storage container and a light receiver for receiving light reflected from the ice accommodated in the ice storage container. The full-ice detection sensor may detect whether it is full of ice based on intensity of the light received at the light receiver. The example of the full-ice detection sensor is not, however, limited thereto.

In an embodiment of the disclosure, the at least one processor 1600 of the refrigerator 1000 may determine that forced ice making is possible when the ice height in the ice storage container included in the ice maker 1200 is less than a threshold height. For example, the at least one processor 1600 of the refrigerator 1000 may determine through the full-ice detection sensor that the ice storage container is not full of ice. The at least one processor 1600 may determine that it is possible to make additional ice because the ice storage container is not full of ice.

In operation S1030, the refrigerator 1000 may supply water into the ice maker 1200 when forced ice making is possible.

Referring to FIG. 11, when the forced ice making is possible, the at least one processor 1600 of the refrigerator 1000 may control the second pump (ice pump) 620 to supply at least a portion of the water stored in the water tank 1100 into the ice maker 1200. In an embodiment of the disclosure, although an automatic ice making function of the refrigerator 1000 is inactive, when the ice storage container 1201 is not full of ice, the at least one processor 1600 may operate the second pump 620 to supply the water in the water tank 1100 into the ice maker 1200.

In operation S1040, the refrigerator 1000 may determine whether there is remaining water in the water tank 1100. For example, the at least one processor 1600 of the refrigerator 1000 may supply at least a portion of the water stored in the water tank 1100 into the ice maker 1200 and then determine whether there is remaining water in the water tank 1100. When only a portion of the water stored in the water tank 1100 is supplied into the ice maker 1200, there may be remaining water in the water tank 1100. When the whole water stored in the water tank 1100 is supplied into the ice maker 1200, there may not be remaining water in the water tank 1100.

In an embodiment of the disclosure, the at least one processor 1600 of the refrigerator 1000 may use the water detection sensor 1500 to determine whether there is remaining water in the water tank 1100. For example, the at least one processor 1600 of the refrigerator 1000 may determine whether water continues to be detected by the water detection sensor 1500 arranged at a location corresponding to the bottom portion of the water tank 1100. When the water is detected by the water detection sensor 1500, the at least one processor 1600 may determine that there is remaining water in the water tank 1100. On the other hand, when the water is not detected by the water detection sensor 1500, the at least one processor 1600 may determine that there is no remaining water in the water tank 1100.

In operation S1050, the refrigerator 1000 may determine whether it is possible to forcedly perform the autofill function. A state of being able to forcedly perform the autofill function may include a state in which the small water tank (hereinafter, an autofill water tank) included in the autofill device 1300 is not full of water.

Referring to FIG. 12, the autofill water tank 1310 may include a cover 1311, an infuser 1312, and a body 1313, without being limited thereto. When the autofill function is activated, a certain amount (e.g., 1.4 ℓ) of water may be maintained in the autofill water tank 1310.

In an embodiment of the disclosure, when the height of the water stored in the autofill water tank 1310 is less than a reference height 1314, the at least one processor 1600 of the refrigerator 1000 may determine that the autofill device 1300 is possible to receive water. The reference height 1314 becomes a reference to determine whether the autofill water tank 1310 is full of water, and at which the water level sensor is located. In other words, when water is detected by the water level sensor arranged at a location corresponding to a full-water reference line (i.e., the reference height 1314), the at least one processor 1600 may determine that the autofill water tank 1310 is full of water. On the other hand, when no water is detected by the water level sensor, the at least one processor 1600 may determine that the autofill water tank 1310 is not full of water and that the autofill device 1300 is possible to receive more water.

In operation S1060, the refrigerator 1000 may supply at least a portion of the water stored in the water tank 1100 into the autofill device 1300 when it is possible to forcedly perform the autofill function. For example, the at least one processor 1600 of the refrigerator 1000 may supply at least a portion of the water stored in the water tank 1100 into the autofill device 1300 when the height of water stored in the small water tank included in the autofill device 1300 is less than the reference height.

Referring to FIG. 12, when the forced performing of the autofill function is possible, the at least one processor 1600 of the refrigerator 1000 may control the third pump (water pump) 610 to supply at least a portion of the water stored in the water tank 1100 into the autofill device 1300. In this case, when the water level sensor of the autofill device 1300 detects water, it means that the autofill water tank 1310 is full of ice, so the at least one processor 1600 may stop operating the third pump 610.

In an embodiment of the disclosure, even when the autofill function of the refrigerator 1000 is inactive, the at least one processor 1600 may operate the third pump 610 to supply the water stored in the water tank 1100 for at least a certain period of time into the autofill device 1300.

In operation S1070, the refrigerator 1000 may determine whether there is remaining water in the water tank 1100. For example, the at least one processor 1600 of the refrigerator 1000 may determine whether there is remaining water in the water tank 1100 after supplying at least a portion of the water stored in the water tank 1100 into the autofill device 1300. When only a portion of the water stored in the water tank 1100 is supplied into the autofill device 1300, there may be remaining water in the water tank 1100. When the whole water stored in the water tank 1100 is supplied into the autofill device 1300, there may not be remaining water in the water tank 1100.

In an embodiment of the disclosure, the at least one processor 1600 of the refrigerator 1000 may use the water detection sensor 1500 to determine whether there is remaining water in the water tank 1100. For example, the at least one processor 1600 of the refrigerator 1000 may determine whether water continues to be detected by the water detection sensor 1500 arranged at a location corresponding to the bottom portion of the water tank 1100. When the water is detected by the water detection sensor 1500, the at least one processor 1600 may determine that there is remaining water in the water tank 1100. On the other hand, when the water is not detected by the water detection sensor 1500, the at least one processor 1600 may determine that there is no remaining water in the water tank 1100.

In operation S1080, the refrigerator 1000 may discharge the remaining water from the water tank 1100 onto the evaporation tray 1801 when there is the remaining water in the water tank 1100.

In an embodiment of the disclosure, when detecting water stored in the water tank 1100 through the water detection sensor 1500 for at least a certain period of time, the at least one processor 1600 of the refrigerator 1000 may supply at least a portion of the water stored in the water tank 1100 into the ice maker 1200 or the autofill device 1300 and discharge the remaining water onto the evaporation tray 1801 through the discharge path for defrost water.

In the meantime, in an embodiment of the disclosure, when the forced ice making is not possible in operation S1020 and the forced performing of the autofill function is not possible in operation S1050, the at least one processor 1600 of the refrigerator 1000 may discharge the whole water stored in the water tank 1100 for at least a certain period of time onto the evaporation tray 1801 through the discharge path for defrost water. For example, when the ice storage container 1201 of the ice maker 1200 is full of ice and the autofill water tank 1310 of the autofill device 1300 is full of water, the at least one processor 1600 may discharge the whole water stored in the water tank 1100 for at least the certain period of time onto the evaporation tray 1801 through the discharge path for defrost water.

In operation S1090, the refrigerator 1000 may control the rpm of the air blowing fan 1803 to a maximum level. For example, the at least one processor 1600 of the refrigerator 1000 may control the rpm of the air blowing fan 1803 to increase the evaporation rate of the water discharged onto the evaporation tray 1801.

In an embodiment of the disclosure, the at least one processor 1600 of the refrigerator 1000 may prevent the waste of water in the water tank 1100 by first supplying at least a portion of the water stored in the water tank 1100 to the ice maker 1200 or the autofill device 1300 if possible, when the water stored in the water tank 1100 for at least a certain period of time is detected.

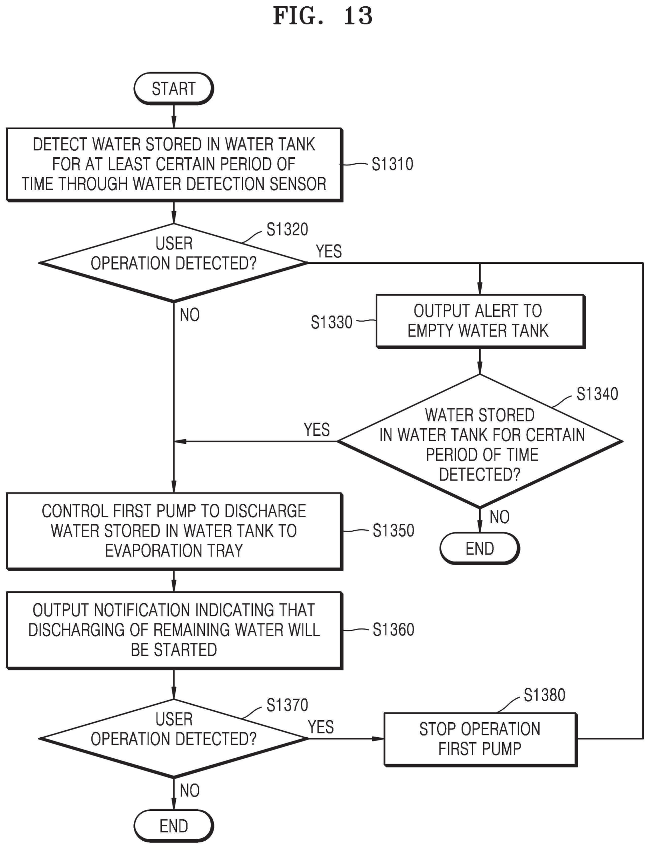

In the meantime, when detecting the water stored in the water tank 1100 for at least the certain period of time through the water detection sensor, the refrigerator 1000 may provide alert for the user to empty the water tank 1100. Furthermore, in an embodiment of the disclosure, the refrigerator 1000 may provide the user with a notification indicating that discharging of the remaining water will be started, when the water of the water tank 1100 is discharged onto the evaporation tray 1801. The operation of the refrigerator 1000 providing alert to empty the water tank or a notification indicating that discharging of the remaining water will be started will be described in detail with reference to FIGS. 13 to 16.

FIG. 13 is a flowchart for describing a method of outputting alert to empty the water tank 1100 or notification indicating that discharging of remaining water will be started, according to an embodiment of the disclosure.

In operation S1310, the refrigerator 1000 may detect with the water detection sensor 1500 the water stored in the water tank 1100 for at least a certain period of time.

In an embodiment of the disclosure, when the water detection sensor 1500 arranged at a location corresponding to a bottom portion of the water tank 1100 continues to detect water for at least a certain period of time (e.g., 30 hours), the at least one processor 1600 of the refrigerator 1000 may determine that the water has not been completely discharged from the water tank 1100 and has been stored there for a long time (e.g., at least 30 hours).

In operation S1320, the refrigerator 1000 may determine whether the user's operation for the refrigerator 1000 is detected within a certain period of time (e.g., 6 hours) after detecting the water stored in the water tank 1100 for at least the certain period of time.

The user's operation may include an operation of opening the fridge door or freezer door, an operation of operating a user interface (e.g., screen touch, temperature setting, running an application, inputting notes, etc.), etc., without being limited thereto. The user's operation may include an operation of approaching the refrigerator 1000. For example, the refrigerator 1000 may detect with a human detection sensor that the user is approaching within a certain range from the refrigerator 1000.

In operation S1330, the refrigerator 1000 may output an alert to empty the water tank 1100, when the user's operation for the refrigerator 1000 is detected. For example, the at least one processor 1600 of the refrigerator 1000 may display the alert to empty the water tank 1100 on a display or output the alert in sound through a speaker.

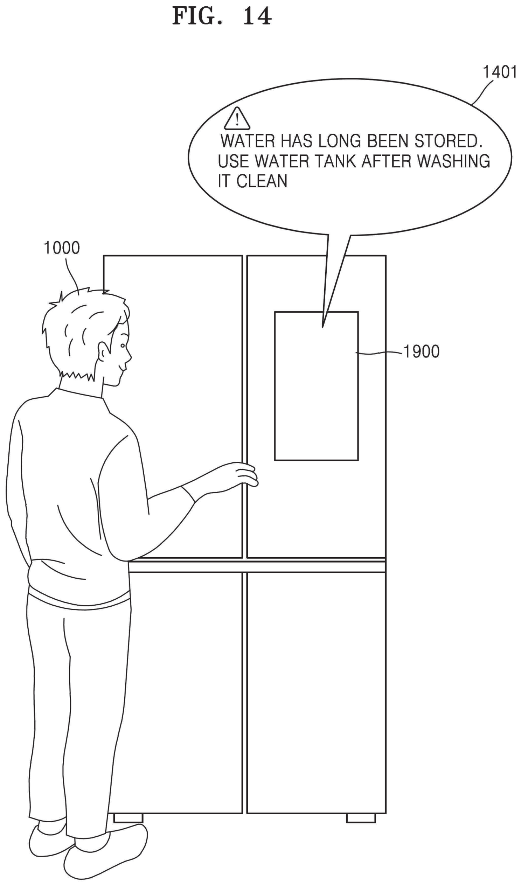

Referring to FIG. 14, the at least one processor 1600 of the refrigerator 1000 may detect water stored in the water tank for at least a certain period of time (e.g., 30 hours). The at least one processor 1600 of the refrigerator 1000 may detect an operation of the user opening the door of the refrigerator 1000 within a certain time (e.g., 2 hours) from when detecting the water stored in the water tank 1100 for at least the certain period of time. In this case, the at least one processor 1600 of the refrigerator 1000 may output an alert to empty the water from the water tank 1100 because the water has long been in the water tank 1100 through an output interface 1900. For example, the at least one processor 1600 of the refrigerator 1000 may output a notification message 1401 "water has long been stored. Use the water tank after washing it clean" on the display.

In an embodiment of the disclosure, the refrigerator 1000 may output the notification to empty the water tank 1100 through a user equipment connected to the refrigerator 1000 as well. In this case, the refrigerator 1000 may be indirectly connected to the user equipment through a server device, or directly connected to the user equipment through short-range communication.

In an embodiment of the disclosure, the server device may include a communication interface for communicating with an external device. The server device may communicate with the refrigerator 1000 or the user equipment through the communication interface. In an embodiment of the disclosure, the refrigerator 1000 may transmit identification information of the refrigerator 1000 or identification information of the user (login information or account information) to the server device, and is able to access the server device after the identification information of the refrigerator 1000 or the identification information of the user (login information or account information) is authenticated by the server device.

In an embodiment of the disclosure, the server device may include an AI processor. The Al processor may generate an AI model by training an artificial neural network. The training of the artificial neural network may refer to creating a mathematical model in which links of neurons that constitute the artificial neural network are able to make best decision while properly changing weights based on data.

In an embodiment of the disclosure, the user equipment may be a device connected to the server device for displaying information provided by the server device. In an embodiment of the disclosure, the user equipment may exchange information with the server device through a certain application (e.g., a home appliance management application) installed in the user equipment.

In an embodiment of the disclosure, the user equipment may be a device connected to the server device through the same account information with the refrigerator 1000. The user equipment may be directly connected to the refrigerator 1000 through a short-range wireless communication channel or indirectly connected to the refrigerator 1000 through the server device.

According to an embodiment of the disclosure, the user equipment may be implemented in various forms. For example, the user equipment as described herein may be a mobile terminal, a refrigerator with a display, a television (TV), a computer, an oven with a display, etc., without being limited thereto. The mobile terminal may include a smart phone, a laptop computer, a tablet personal computer (tablet PC), a digital camera, an electronic book (e-book) reader, a digital broadcasting terminal, a personal digital assistant (PDA), a portable multimedia player (PMP), a navigation system, an MP3 player, etc., without being limited thereto. For example, the mobile terminal may include a wearable device that may be worn by the user. An occasion when the user equipment is a smart phone will now be taken as an example, for convenience of explanation.

In an embodiment of the disclosure, a user equipment 3000 may run a certain application (e.g., the home appliance management application) provided by the server device 2000, based on a user input. In this case, the user may check operation status of the refrigerator 1000 (e.g., fridge temperature or freezer temperature), an image of the inside of the refrigerator, etc., through an execution window of the application.

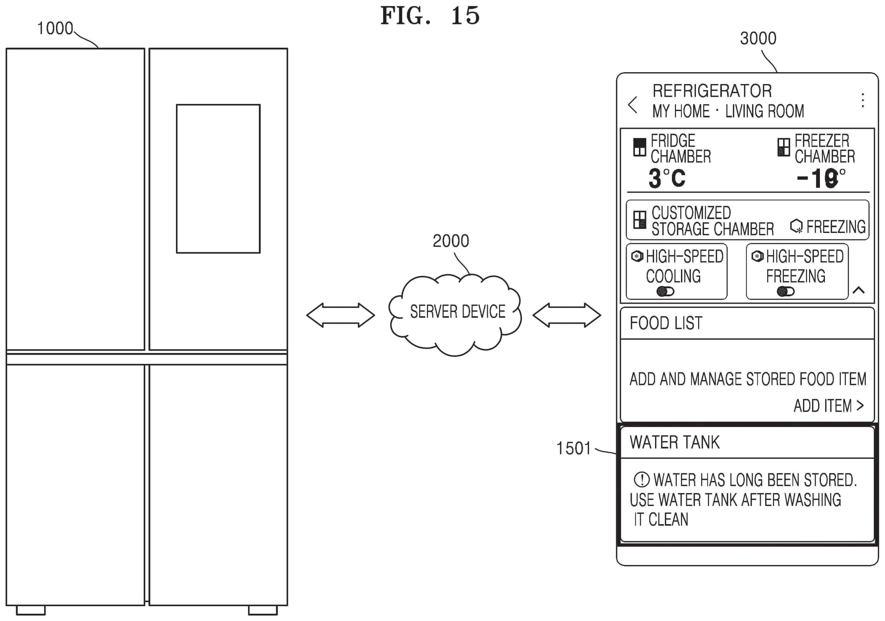

Referring to FIG. 15, the at least one processor 1600 of the refrigerator 1000 may send the server device 2000, through the communication interface, information indicating that water stored in the water tank 1100 for at least a certain period of time has been detected, information indicating that water has not been discharged from the water tank 1100 for at least a certain period of time, information about a time for which water has continued to be detected or information indicating that the water tank 1100 needs to be emptied.

The server device 2000 may send the alert to empty the water tank 1100 to the user equipment 3000 based on information received from the refrigerator 1000. In this case, the user equipment 3000 may output a notification message 1501, "Water has long been stored. Use the water tank after washing it clean" through the execution window of the application. The user may check the notification message 1501 displayed on the execution window of the application and recognize that the water in the water tank 1100 is old.

Turning back to FIG. 13, in operation S1340, the refrigerator 1000 may determine whether the water stored in the water tank 1100 for at least a certain period of time is detected from when the alert to empty the water tank 1100 is output.

For example, when the user does not empty the water tank 1100 even after the alert to empty the water tank 1100 is output, the water detection sensor 1500 may keep detecting the water stored in the water tank 1100. On the other hand, the user may empty the water tank 1100 after checking the alert to empty the water tank 1100. When the user empties the water tank 1100, the water detection sensor 1500 may not detect water stored in the water tank 1100. When the user fills the water tank 1100 with fresh water, the water detection sensor 1500 may detect the water once again.

In an embodiment of the disclosure, when the water detection sensor 1500 keeps detecting water because the user does not empty the water tank 1100 even after the alert to empty the water tank 1100 is output, the at least one processor 1600 may perform operation S1350. In other words, the at least one processor 1600 may control the first pump 630 to discharge the water stored in the water tank 1100 onto the evaporation tray 1801. On the other hand, in an embodiment of the disclosure, the at least one processor 1600 may determine that the user has emptied the water tank 1100 when receiving a signal indicating that water may not be detected from the water detection sensor 1500 after the alert to empty the water tank 1100 is output.

In operation S1350, the refrigerator 1000 may control the first pump 630 to discharge the water stored in the water tank 1110 onto the evaporation tray 1801, when the user's operation for the refrigerator 1000 is not detected within a certain time after detecting water stored in the water tank 1100 for at least a certain period of time.

Even when the refrigerator 1000 outputs the alert to empty the water tank 1100 in a case that the user's operation is not detected for a long time, it is difficult for the user to check it out and the user may have difficulty in emptying the water tank 1100. For example, the user may go on a trip for a week after filling the water tank 1100 with water. In this case, the refrigerator 1000 may not detect the user's operation within a certain period of time, so it may discharge the water stored in the water tank 1100 onto the evaporation tray 1801 without outputting the alert to empty the water tank 1100 on the display of the refrigerator 1000.

In operation S1360, in an embodiment of the disclosure, the refrigerator 1000 may output a notification indicating that discharging of remaining water will be started, when controlling the first pump 630 to discharge the water stored in the water tank 1100 onto the evaporation tray 1801.

In an embodiment of the disclosure, the at least one processor 1600 of the refrigerator 1000 may send the user equipment 3000, through the server device 2000, a notification message indicating that discharging of remaining water will be started, when controlling the first pump 630 to discharge the water stored in the water tank 1100 onto the evaporation tray 1801. In this case, the notification message indicating that discharging of the remaining water will be started may be output on the user equipment 3000.

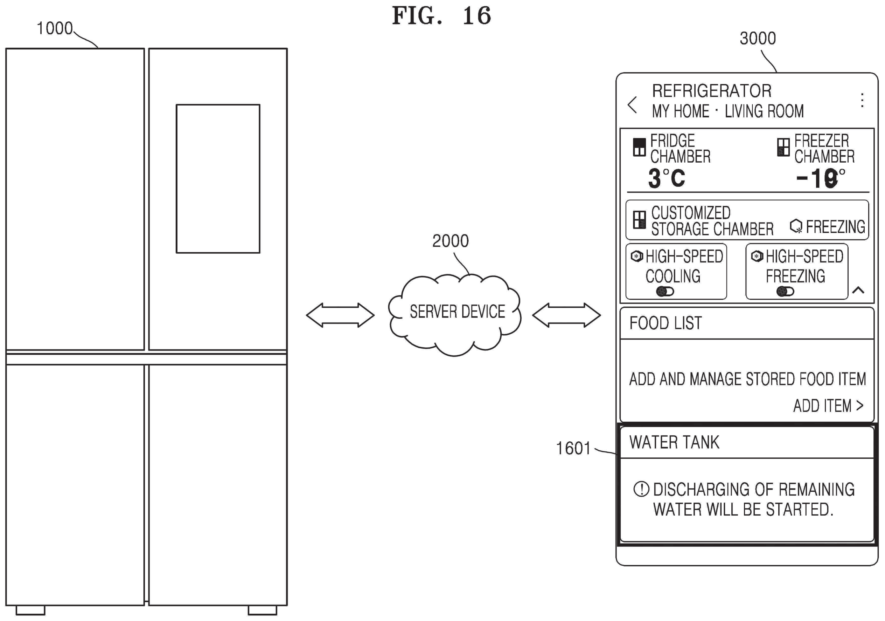

Referring to FIG. 16, the refrigerator 1000 may transmit information indicating that discharging of the remaining water from the water tank 1100 will be started to the server device 2000 through the communication interface. The server device 2000 may send the notification indicating that discharging of the remaining water will be started to the user terminal 3000 based on information received from the refrigerator 1000. In this case, the user equipment 3000 may output a notification message 1601 "discharging of remaining water will be started" through an execution window of an application. The user may check the notification message 1601 displayed on the execution window of the application and recognize that the remaining water is being discharged from the water tank 1100.

In operations S1370 and S1380, in an embodiment of the disclosure, the refrigerator 1000 may stop operating the first pump 630 when detecting the user's operation in operation S1370 while discharging the water stored in the water tank 1100 onto the evaporation tray 1801. Operation S1330 may then be performed.

For example, the at least one processor 1600 of the refrigerator 1000 may stop operating the first pump 630 and output an alert to empty the water tank 1100 through the output interface 1900 or the user equipment 3000, when detecting the user's operation for the refrigerator 1000 while discharging the water stored in the water tank 1100 onto the evaporation tray 1801.

An operation of the refrigerator 1000 when the water tank 1100 is emptied will now be described in detail with reference to FIG. 17.

FIG. 17 is a flowchart for describing a method of deactivating a pump's operation for supplying water to a water supply system, according to an embodiment of the disclosure.

In operation S1710, in an embodiment of the disclosure, the refrigerator 1000 may receive, from the water detection sensor 1500, a signal indicating that water is not detected in the water tank 1100.

In an embodiment of the disclosure, when the water detection sensor 1500 detects no water, it may mean that there is no remaining water in the water tank 1100 as the water detection sensor 1500 is arranged at a location corresponding to a bottom portion of the water tank 1100.

In operation S1720, in an embodiment of the disclosure, when receiving, from the water detection sensor 1500, the signal indicating that water is not detected in the water tank 1100, the refrigerator 1000 may operate the first pump 630 to discharge the remaining water in the water tank 1100 onto the evaporation tray 1801.

In an embodiment of the disclosure, as a small amount of remaining water may be left in the water tank 1100 even when the water is not detected by the water detection sensor 1500, the at least one processor 1600 may operate the first pump 630 for a certain period of time to completely empty the water tank 1100. In the case of completely emptying the water tank 1100 by operating the first pump 630 for the certain period of time, it may prevent the water tank 1100 from going moldy or being incrusted with slime due to the remaining water.

In operation S1730, in an embodiment of the disclosure, the refrigerator 1000 may deactivate at least one pump (e.g., the water pump 610 or the ice pump 620) for supplying water into at least one water supply system (e.g., the ice maker 1200, the autofill device 1300 or the dispenser 1400) when receiving, from the water detection sensor 1500, a signal indicating that water is not detected in the water tank 1100.

When the pump for supplying water into the water supply system operates while there is no water in the water tank 1100, the motor may be rapidly heated, shortening or damaging the lifespan of the pump, causing the pump operation noise to grow louder. Hence, in an embodiment of the disclosure, the at least one processor 1600 may not operate the pump even when the user operates the lever of the dispenser 1400 or the automatic ice making function or the autofill function is activated while there is no water in the water tank 1100. In this case, the pump may be protected, and an increase in pump operation noise may be prevented.

In operation S1710, in an embodiment of the disclosure, the refrigerator 1000 may output an alert to replenish the water tank 1100 with water when receiving, from the water detection sensor 1500, a signal indicating that water is not detected in the water tank 1100.

For example, the at least one processor 1600 of the refrigerator 1000 may output the alert to replenish the water tank 1100 with water through at least one of the user equipment 3000 connected to the server device 2000, a display or a speaker when receiving, from the water detection sensor 1500, the signal indicating that no water is detected in the water tank 1100.

The operation of the refrigerator 1000 outputting the alert to replenish the water tank 1100 with water will now be further described with reference to FIG. 18.

FIG. 18 is a diagram for describing an operation of outputting alert to replenish the water tank 1100 with water, according to an embodiment of the disclosure.

Referring to FIG. 18, when the at least one processor 1600 of the refrigerator 1000 receives a signal indicating that water is not detected in the water tank 1100 from the water detection sensor 1500, it may output an alert to replenish the water tank 1100 with water through the output interface 1900 (e.g., a display, a speaker, etc.) of the refrigerator 1000.

In an embodiment of the disclosure, when the user is going to use the water in the water tank 1100, the at least one processor 1600 of the refrigerator 1000 may output an alert to replenish the water tank 1100 with water through the output interface 1900. For example, when receiving an input to activate the automatic ice making function or the autofill function from the user or receiving an input of pressing the lever of the dispenser 1400, the at least one processor 1600 may output the notification message 1810 "check the water supply sate" or output a warning sound through the speaker. The user may check the notification message 1810 and replenish the water tank 1100 with water.

In the meantime, when the at least one processor 1600 receives, from the user, no input indicating that the user is going to use water in the water tank 1100 for a certain period of time (e.g., 12 hours) while the water tank 1100 is empty, the at least one processor 1600 may monitor whether the water tank 1100 is replenished with water, and after a lapse of a certain period of time (e.g., 12 hours), output the notification message 1810 through the output interface 1900.

In an embodiment of the disclosure, the alert to replenish the water tank 1100 with water may be output by the user equipment 3000 connected to the refrigerator 1000 through the server device 2000. For example, when receiving, from the water detection sensor 1500, a signal indicating that no water is detected in the water tank 1100, the at least one processor 1600 of the refrigerator 1000 may transmit information indicating that the water tank 1100 is empty or information indicating that water replenishment is required to the server device 2000. In this case, the server device 2000 may output an alert to replenish the water tank 1100 with water through an execution window of an application installed in the user equipment 3000. For example, in the execution window of the application of the user equipment 3000, a notification message 1820 "Check a water supply state. If you use an autofill purifier function, you need to clean the water tank periodically" may be displayed. The user may identify that the water tank 1100 is empty through the notification message 1820, and replenish the water tank 1100 with water. Accordingly, the pump may be prevented from being damaged by otherwise operating while the water tank 1100 is empty.

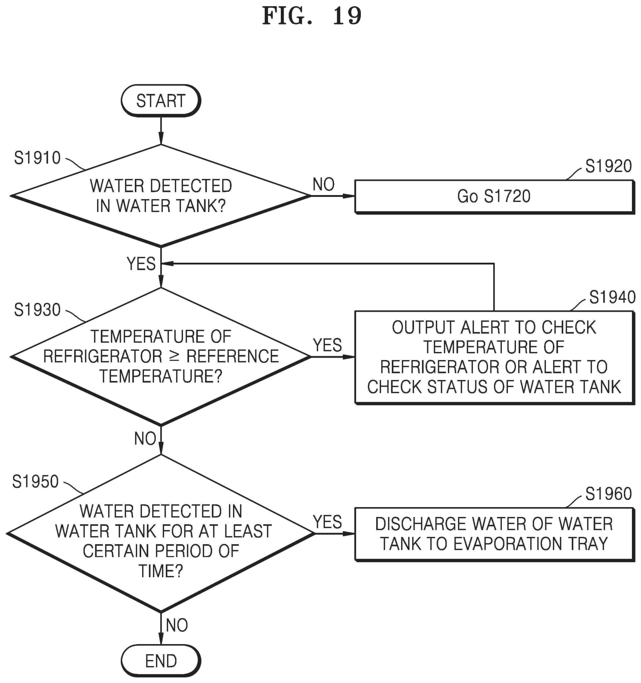

FIG. 19 is a flowchart for describing a method of outputting alert when the temperature in the refrigerator 1000 is at least a reference temperature, according to an embodiment of the disclosure.

In operation S1910, in an embodiment of the disclosure, the refrigerator 1000 may use the water detection sensor 1500 to determine whether water is detected in the water tank 1100. For example, the at least one processor 1600 of the refrigerator 1000 may receive a signal indicating that water is detected or a signal indicating that water is not detected from the water detection sensor 1500 arranged at a location corresponding to the lowest portion of the water tank 1100.

In an embodiment of the disclosure, when no water is detected in the water tank 1100 in operation S1910, the refrigerator 1000 may perform operation S1720 of FIG. 17 in operation S1920.

For example, when the signal indicating that no water is detected is received from the water detection sensor 1500, the at least one processor 1600 of the refrigerator 1000 may deactivate operation of the pump (e.g., the water pump or the ice pump) for supplying water into the water supply system, thereby preventing noise occurrence from the pump. Furthermore, the at least one processor 1600 of the refrigerator 1000 may output an alert to replenish the water tank 1100 with water 1100 through a display, a speaker or the user equipment 3000.

In an embodiment of the disclosure, when water is detected in the water tank 1100 in operation S1910, the refrigerator 1000 may determine whether the temperature of the refrigerator 1000 is at least the reference temperature in operation S1930. For example, the at least one processor 160 of the refrigerator 1000 may use at least one temperature sensor arranged in the refrigerator 1000 to determine whether the temperature in the fridge chamber where the water tank 1100 is located is at least the reference temperature. The reference temperature may be a temperature at which a harmful substance such as mold may be produced. For example, the reference temperature may be 10 ° C, but is not limited thereto.

In an embodiment of the disclosure, the temperature of the refrigerator 1000 may rise to at least the reference temperature in an abnormal situation such as a door being slightly opened, refrigerant being leaked, power outage, etc. In this case, the harmful substance such as mold may spread in the refrigerator 1000, so the at least one processor 1600 may monitor whether the temperature in the fridge chamber rises to at least the reference temperature.

In an embodiment of the disclosure, when the temperature of the refrigerator 1000 is at least the reference temperature in operation S1930, the refrigerator 1000 may output an alert to check the temperature in the refrigerator 1000 or the status of the water tank 1100 in operation S1940.

For example, when the temperature of the refrigerator 1000 is at least the reference temperature, the at least one processor 1600 of the refrigerator 1000 may output the alert to check the temperature in the refrigerator 1000 or alert to check the status of the water tank 1100 through at least one of the user equipment 3000 connected to the server device 2000, a display or a speaker.

In an embodiment of the disclosure, the refrigerator 1000 may continue to monitor whether the temperature of the refrigerator 1000 goes down below the reference temperature after outputting the alert to check the temperature in the refrigerator 1000 or alert to check the status of the water tank 1100.

Bacteria that are common sources of contamination do not grow (proliferate) at low temperatures of about 10 degrees or less and high temperatures of about 60 degrees or more, so when the water tank 1100 and the water supply system are controlled not to rise above about 10 degrees, the occurrence and spread of contamination may be minimized.

In the meantime, in an embodiment of the disclosure, the at least one processor 1600 may forcedly operate the compressor 1804 to prevent the spread of contamination, when the temperature in the refrigerator 1000 is at least the reference temperature.

In an embodiment of the disclosure, when the temperature of the refrigerator 1000 is lower than the reference temperature in operation S1930, the refrigerator 1000 may determine whether water is detected in the water tank 1100 for at least a certain period of time in operation S1950.

In an embodiment of the disclosure, the at least one processor 1600 of the refrigerator 1000 may identify a time for which water is continuously detected by the water detection sensor 1500. For example, when water is continuously detected by the water detection sensor 1500 for at least 30 hours, the at least one processor 1600 of the refrigerator 1000 may determine that the water has not been discharged from the water tank 1100 for at least 30 hours.

In an embodiment of the disclosure, when water is detected in the water tank 1100 for at least a certain period of time in operation S1950, the refrigerator 1000 may discharge the water from the water tank 1100 onto the evaporation tray 1801 in operation S1960.

In an embodiment of the disclosure, when the water stored in the water tank 1100 is detected for at least a certain period of time by the water detection sensor 1500, the refrigerator 1000 may control the first pump 630 to discharge the water stored in the water tank 1100 onto the evaporation tray 1801 under the condenser 1802 in the machine room 1800 by using the discharge path for defrost water. For example, the at least one processor 1600 of the refrigerator 1000 may operate the first pump 630 so that the water in the water tank 1100 is moved to the drain plate 1710 under the evaporator 1700 through the water tank hose 1110. The water discharged from the water tank 1100 to the drain plate 1710 through the water tank hose 1110 may flow into the drain tube 1720 through the drain hole 1711 of the drain plate 1710 and arrive at the evaporation tray 1801.

In an embodiment of the disclosure, when the water of the water tank 1100 has not been discharged for a long time, the at least one processor 1600 may discharge the water from the water tank 1100 onto the evaporation tray 1801 so that the water is naturally evaporated, in order to prevent contamination.

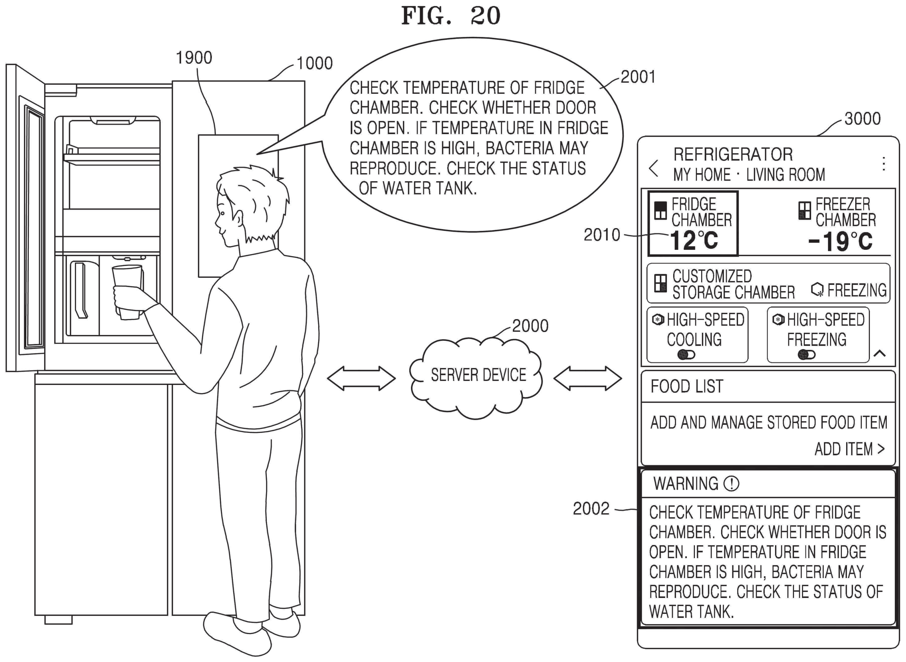

The operation of the refrigerator 1000 outputting the alert to check the temperature in the refrigerator 1000 or the alert to check the status of the water tank 1100 will now be further described with reference to FIG. 20.

FIG. 20 is a diagram for describing an operation of outputting alert to check the temperature in the refrigerator 1000 or alert to check the status of the water tank 1100, according to an embodiment of the disclosure.

Referring to FIG. 20, the at least one processor 1600 may identify with a temperature sensor that the temperature of the fridge chamber is 12 °C. In this case, the temperature of the fridge chamber is at least reference temperature (e.g., 10 °C), so the at least one processor 1600 may output the alert to check the temperature in the refrigerator 1000 or the alert to check the status of the water tank 1100 through the output interface 1900 (e.g., a display, a speaker, etc.).

For example, the at least one processor 1600 may output a notification message 2001 "Check the temperature of the fridge chamber. Check whether a door is open. If the temperature in the fridge chamber is high, bacteria may reproduce. Check the status of the water tank" on the display, or output warning sound through the speaker. The user may check the notification message 2001 and check the status of the refrigerator 1000 or the water tank 1100, thereby preventing reproduction of bacteria in the refrigerator 1000.

In an embodiment of the disclosure, the alert to check the temperature in the refrigerator 1000 or the alert to check the status of the water tank 1100 may be output by the user equipment 3000 connected to the refrigerator 1000 through the server device 2000. For example, when the temperature of the fridge chamber is identified as being at least the reference temperature, the at least one processor 1600 of the refrigerator 1000 may transmit information indicating that the temperature of the fridge chamber is at least the reference temperature or information indicating that the temperature of fridge chamber needs to be checked to the server device 2000. In this case, the server device 2000 may output the alert to check the temperature in the refrigerator 1000 or the alert to check the status of the water tank 1100 through an execution window of an application installed in the user equipment 3000. For example, in the execution window of the application of the user equipment 3000, a notification message 2002 "Check the temperature of the fridge chamber. If the temperature in the fridge chamber is high, bacteria may reproduce. Check the status of the water tank" may be displayed.

According to an embodiment of the disclosure, the refrigerator 1000 may be provided to prevent (minimize) contamination of the water supply system by discharging water from the water tank 1100 onto the evaporation tray 1801 in the machine room 1800 through a discharge path for defrost water when the water is left in the water tank 1100 for a long time.

According to an embodiment of the disclosure, the refrigerator 1000 may include a main body; a door rotationally or slidably installed at a front of the main body; at least one storage chamber for storing items; the water tank 1100 arranged in the at least one storage chamber for storing water to be supplied to at least one water supply system; the water detection sensor 1500 for detecting the water stored in the water tank 1500; and the at least one processor 1600 configured to, when the water stored in the water tank 1100 is detected for at least a certain period of time by the water detection sensor 1500, control the first pump 630 to discharge the water stored in the water tank 1100 onto the evaporation tray 1801 under the condenser 1802 in the machine room 1800 by using a discharge path for defrost water. According to an embodiment of the disclosure, the water tank 1100 may be prevented from being contaminated by remaining water by discharging the water stored in the water tank 1100 for at least a certain period of time (e.g., 24 hours) onto the evaporation tray 1801. As the water discharged onto the evaporation tray 1801 is naturally evaporated, user convenience may increase. In the meantime, the water stored in the water tank 1100 is discharged onto the evaporation tray 1801 through the discharge path for defrost water, eliminating the need to change the system a lot.

In an embodiment of the disclosure, the water detection sensor 1500 may include at least one of a capacitive sensor, the weight detection sensor 1501 or a contact-type sensor.

In an embodiment of the disclosure, the inside of the bottom portion of the water tank 1100 may be spherically or slopingly formed. When the inside of the bottom portion of the water tank 1100 has the spherical or slanted surface, the remaining water in the water tank 11oo may be minimized and even if the amount of the remaining water in the water tank 1100 is so small, the remaining water in the water tank 1100 can be detected. In an embodiment of the disclosure, the water detection sensor 1500 may be arranged at a location corresponding to a lowest part of the bottom portion of the water tank 1100. When the water detection sensor 1500 is arranged at the location corresponding to the lowest of the water tank 1100, the water detection sensor 1500 may efficiently detect the remaining water in the water tank 1100.

In an embodiment of the disclosure, the at least one processor 1600 may control revolutions per minute (rpm) of the air blowing fan 1803 in the machine room 1800 to a maximum level as the water stored in the water tank 1100 is discharged onto the evaporation tray 1801. In this case, the water discharged onto the evaporation tray 1801 may be naturally evaporated quickly.

According to an embodiment of the disclosure, the discharge path for defrost water may include the drain tube 1720 connected from the drain plate 1710 under the evaporator 1700 to the evaporation tray 1801 in the machine room 1800.

According to an embodiment of the disclosure, the water tank hose 1110 for discharging water from the water tank 1100 may be connected to the drain plate 1710 under the evaporator 1700 from the water tank 1100. The water discharged from the water tank 1100 to the drain plate 1710 through the water tank hose 1110 may flow into the drain tube 1720 through the drain hole 1711 of the drain plate 1710 and arrive at the evaporation tray 1801.

According to an embodiment of the disclosure, the at least one processor 1600 may determine a time to discharge the water stored in the water tank 1100 in consideration of discharging intervals of defrost water. The at least one processor 1600 may prevent the water from overflowing from the evaporation tray 1801 by determining the time to discharge the water stored in the water tank 1100 in consideration of the discharging intervals of defrost water.

According to an embodiment of the disclosure, the at least one processor 1600 may determine an available amount of water to be discharged at once from the water tank 1100 based on the capacity of the evaporation tray 1801. The at least one processor 1600 may operate the first pump 630 for a time corresponding to the determined amount of water. The at least one processor 1600 may prevent water from overflowing from the evaporation tray 1801 when the water stored in the water tank 1100 has larger capacity than the evaporation tray 1801 by determining the available amount of water to be discharged at once.

According to an embodiment of the disclosure, the at least one processor 1600 may operate the first pump 630 multiple times at certain time intervals, when the water stored in the water tank 1100 exceeds the determined amount of water.

According to an embodiment of the disclosure, the water supply system may include at least one of the ice maker 1200, the autofill device 1300 or the dispenser 1400.

According to an embodiment of the disclosure, the at least one processor 1600 may determine whether at least one water supply system is possible to receive water when the water stored in the water tank 1100 is detected for at least a certain period of time through the water detection sensor 1500. When the at least one water supply system is possible to receive water, the at least one processor 1600 may supply at least a portion of the water stored in the water tank 1100 into the at least one water supply system. The at least one processor 1600 may control the first pump 630 to discharge remaining water in the water tank 1100 onto the evaporation tray 1801 in the machine room 1800 through a discharge path for defrost water after supplying at least a portion of the water stored in the water tank 1100 to the at least one water supply system. The at least one processor 1600 may prevent the waste of water by first supplying water in the water tank 1100 to at least one water supply system before discharging the remaining water onto the evaporation tray 1801 to be naturally evaporated.

According to an embodiment of the disclosure, the at least one water supply system may include the ice maker 1200. The at least one processor 1600 may determine that the ice maker 1200 is possible to receive water when the height of ice in the ice storage container 1201 included in the ice maker 1200 is less than a threshold height, and control the second pump 620 to supply at least a portion of the water stored in the water tank 1100 into the ice maker 1200. To prevent contamination of water, freezing and storing the water in the ice maker 1200 may be more advantageous than storing the water in the water tank 1100 for a long time

According to an embodiment of the disclosure, the water supply system may include the autofill device 1300. The at least one processor 1600 may determine that the autofill device 1300 is possible to receive water when the height of water stored in the autofill water tank 1310 included in the autofill device 1300 is less than a threshold height, and control the third pump 610 to supply at least a portion of the water stored in the water tank 1100 into the autofill device 1300. As the autofill water tank 1310 of the autofill device 1300 is applied in a separate space and has an environment where bacteria reproduction is more difficult than in the water tank 1100 because no external contamination is introduced thereto, the water may be moved into the autofill device 1300 from the water tank 1100.

According to an embodiment of the disclosure, the reference height may correspond to the height of the water level sensor for detecting water stored in the small autofill water tank 1310. According to an embodiment of the disclosure, the at least one processor 1600 may control the third pump 610 to supply water into the autofill device 1300 until the water level sensor detects water.

According to an embodiment of the disclosure, the at least one processor 1600 may send the user equipment 3000, through the server device 2000, a notification message indicating that discharging of remaining water will be started, when controlling the first pump 630 to discharge the water stored in the water tank 1100 onto the evaporation tray 1801. The user may recognize through the notification message the fact that water that has long been stored in the water tank 1100 is discharged.

According to an embodiment of the disclosure, the at least one processor 1600 may stop operating the first pump 630 for discharging the water stored in the water tank 1100 onto the evaporation tray 1801 when an operation of the user who uses the refrigerator 1000 is detected. Alert to empty the water tank 1100 may be output through a display or a speaker of the refrigerator 1000. As the user checks alert or empty the water tank 1100 in person when the operation of the user is detected, the at least one processor 1600 may output an alert to empty the water tank 1100 through the output interface 1900 of the refrigerator 1000.

According to an embodiment of the disclosure, the at least one processor 1600 may deactivate operation of at least one pump for supplying the water from the water tank 1100 into the at least one water supply system in response to receiving of a signal indicating that no water is detected in the water tank 1100 from the water detection sensor 1500 arranged at a location corresponding to a bottom portion of the water tank 1100. The at least one processor 1600 may prevent the pump from being damaged or from making noise by deactivating operation of the pump connected to the water supply system when there is no water in the water tank 1100.

According to an embodiment of the disclosure, the at least one processor 1600 may output the alert to replenish the water tank 1100 with water through at least one of the user equipment 3000 connected to the server device 2000, a display or a speaker when receiving, from the water detection sensor 1500, the signal indicating that no water is detected in the water tank 1100. The user may check the alert for water replenishment and recognize that there is no water in the water tank 1100. The user may not operate the water supply system and may replenish the water tank 1100 with water right away when there is no water in the water tank 1100, so the pump may not be forcedly operated without water in the water tank 1100 and may thus be prevented from being damaged or making noise.

According to an embodiment of the disclosure, the at least one processor 1600 may operate the first pump 630 for discharging remaining water from the water tank 1100 for a certain period of time when receiving, from the water detection sensor 1500, the signal indicating that no water is detected in the water tank 1100. As the water tank 1100 is likely to be contaminated by a small amount of remaining water left in the water tank 1100 even when the water is not detected by the water detection sensor 1500, the at least one processor 1600 may operate the first pump 630 for a certain period of time to discharge the remaining water.

According to an embodiment of the disclosure, when the temperature of the refrigerator 1000 is at least the reference temperature, the at least one processor 1600 may output an alert to check the temperature in the refrigerator 1000 or alert to check the status of the water tank 1100 through at least one of the user equipment 3000 connected to the server device 2000, a display or a speaker. The alert may be provided for the user when the temperature of the refrigerator 1000 is at least the reference temperature, thereby preventing foods in the refrigerator 1000 from going bad or the water in the water tank 1100 from being contaminated.

According to an embodiment of the disclosure, a refrigerator 1000 includes a main body; a door rotationally or slidably installed at a front of the main body; at least one storage chamber configured to store items; a water tank 1100 arranged in the at least one storage chamber and configured to store water to be supplied to at least one water supply system; a water detection sensor 1500 configured to detect the water stored in the water tank 1100; and at least one processor 1600 configured to, when the water stored in the water tank 1100 is detected for at least a certain period of time by the water detection sensor 1500 and an operation of a user who uses the refrigerator 1000 is detected, output an alert to empty the water tank 1000 through at least one of user equipment connected to a server device 2000, a display or a speaker.

The machine-readable storage medium may be provided in the form of a non-transitory storage medium. The term 'non-transitory storage medium' may mean a tangible device without including a signal, e.g., electromagnetic waves, and may not distinguish between storing data in the storage medium semi-permanently and temporarily. For example, the non-transitory storage medium may include a buffer that temporarily stores data.

In an embodiment of the disclosure, the aforementioned method according to the various embodiments of the disclosure may be provided in a computer program product. The computer program product may be a commercial product that may be traded between a seller and a buyer. The computer program product may be distributed in the form of a machine-readable storage medium (e.g., a compact disc read only memory (CD-ROM) or a universal serial bus (USB) flash drive) or distributed directly between two user devices (e.g., smart phones) or online (e.g., downloaded or uploaded). In the case of the online distribution, at least part of the computer program product (e.g., a downloadable app) may be at least temporarily stored or arbitrarily created in a storage medium that may be readable to a device such as a server of the manufacturer, a server of the application store, or a relay server.

## Claims

1. A refrigerator (1000) comprising:
a main body;
a door rotationally or slidably installed at a front of the main body;
at least one storage chamber configured to store items;
a water tank (1100) arranged in the at least one storage chamber and configured to store water to be supplied to at least one water supply system;
a water detection sensor (1500) configured to detect the water stored in the water tank (1100); and
at least one processor (1600) configured to, when the water stored in the water tank (1100) is detected for at least a certain period of time by the water detection sensor (1500), control a first pump (630) to discharge the water stored in the water tank (1100) onto an evaporation tray (1801) under a condenser (1802) in a machine room (1800) by using a discharge path for defrost water.

2. The refrigerator of claim 1, wherein an inside of a bottom portion of the water tank (1100) is spherical or has a slope such that an area of the inside of the bottom portion is smaller than an area of an inside of other portions of the water tank,
wherein the water detection sensor (1500) is arranged at a location corresponding to a lowest part of the bottom portion of the water tank (1100), and
wherein the water detection sensor (1500) comprises at least one of a capacitive sensor, a weight detection sensor (1501) or a contact-type sensor.

3. The refrigerator of any of claims 1 to 2, wherein the at least one processor (1600) is configured to control revolutions per minute (rpm) of an air blowing fan (1803) in the machine room (1800) to a maximum level while the water stored in the water tank (1100) is discharged onto the evaporation tray (1801).

4. The refrigerator of any of claims 1 to 3, wherein the discharge path for defrost water comprises a drain tube (1720) connected from a drain plate (1710) under an evaporator (1700) to the evaporation tray (1801) in the machine room (1800), wherein a water tank hose (1110) configured to discharge water from the water tank (1100) is connected to the drain plate (1710) under the evaporator (1700) from the water tank (1100), and
wherein the water discharged from the water tank (1100) to the drain plate (1710) through the water tank hose (1110) flows into the drain tube (1720) through a drain hole (1711) of the drain plate (1710) and arrives at the evaporation tray (1801).

5. The refrigerator of any of claims 1 to 4, wherein the at least one processor (1600) is configured to determine a time to discharge the water stored in the water tank (1100) in consideration of discharging intervals of the defrost water.

6. The refrigerator of any of claims 1 to 5, wherein the at least one processor (1600) is configured to
determine an available amount of water to be discharged at once from the water tank (1100) based on a capacity of the evaporation tray (1801),
operate the first pump (630) for a time corresponding to the determined amount of water, and
operate the first pump (630) multiple times at certain time intervals when the water stored in the water tank (1100) exceeds the determined amount of water.

7. The refrigerator of any of claims 1 to 6, wherein the water supply system comprises at least one of an ice maker (1200), an autofill device (1300) or a dispenser (1400).

8. The refrigerator of any of claims 1 to 7, wherein the at least one processor (1600) is configured to determine whether the at least one water supply system is possible to receive water when the water stored in the water tank (1100) is detected for the at least a certain period of time through the water detection sensor (1500),
supply at least a portion of the water stored in the water tank (1100) into the at least one water supply system when the at least one water supply system is possible to receive water, and
control the first pump (630) to discharge remaining water in the water tank (1100) onto the evaporation tray (1801) in the machine room (1800) through the discharge path for defrost water when the remaining water exists in the water tank (1100) after supplying the at least a portion of the water stored in the water tank (1100) to the at least one water supply system.

9. The refrigerator of claim 8, wherein the at least one water supply system comprises an ice maker (1200), and
the at least one processor (1600) is configured to determine that the ice maker (1200) is possible to receive water when a height of ice in an ice storage container (1201) included in the ice maker (1200) is less than a threshold height, and control a second pump (620) to supply the at least a portion of the water stored in the water tank (1100) into the ice maker (1200).

10. The refrigerator of claim 8, wherein the at least one water supply system comprises an autofill device (1300), and
the at least one processor (1600) is configured to determine that the autofill device (1300) is possible to receive water when a height of water stored in an autofill water tank (1310) included in the autofill device (1300) is less than a reference height, and control a third pump (610) to supply the at least a portion of the water stored in the water tank (1100) into the autofill device (1300).

11. The refrigerator of claim 10, wherein the reference height corresponds to height of a water level sensor configured to detect water stored in the autofill water tank (1310), and
the at least one processor (1600) is configured to control the third pump (610) to supply water into the autofill device (1300) until the water level sensor detects water.

12. The refrigerator of any of claims 1 to 11, wherein, when controlling the first pump (630) to discharge the water stored in the water tank (1100) onto the evaporation tray (1801), the at least one processor (1600) is configured to send a notification message to user equipment (3000) through a server device (2000), and the notification message indicates that discharging of remaining water will start.

13. The refrigerator of any of claims 1 to 12, wherein the at least one processor (1600) is configured to
stop operating the first pump (630) for discharging the water stored in the water tank (1100) onto the evaporation tray (1801) when an operation of a user who uses the refrigerator (1000) is detected, and
output an alert to empty the water tank (1100) through a display or a speaker of the refrigerator (1000).

14. The refrigerator of any of claims 1 to 13, wherein the at least one processor (1600) is configured to:
in response to receiving a signal indicating that no water is detected in the water tank (1100) from the water detection sensor (1500) arranged at a location corresponding to a bottom portion of the water tank (1100),
deactivate operation of at least one pump for supplying the water from the water tank (1100) into the at least one water supply system,
output an alert to replenish the water tank (1100) with water through at least one of user equipment (3000) connected to the server device (2000), a display or a speaker, and
operate the first pump (630) to discharge remaining water from the water tank (1100) for a certain period of time.

15. The refrigerator of any of claims 1 to 14, wherein the at least one processor (1600) is configured to, when a temperature of an inside of the refrigerator (1000) is a reference temperature or higher, output an alert to check the temperature in the refrigerator (1000) or an alert to check a status of the water tank (1100) through at least one of user equipment (3000) connected to the server device (2000), a display or a speaker.
